# EUROPÄISCHE PATENTSCHRIFT

(11) **EP 2 150 781 B1**
(45) Veröffentlichungstag und Bekanntmachung des Hinweises auf die Patenterteilung: **11.04.2012**
(21) Anmeldenummer: 08749688.1
(22) Anmeldetag: 24.04.2008
(51) Int. Cl.: G01F 1/84, G01F 15/06, G01F 25/00, G05B 19/042

(54) **VERFAHREN ZUM INBETRIEBNEHMEN UND/ODER REKONFIGURIEREN EINES PROGRAMMIERBAREN FELDMESSGERÄTS**
METHOD FOR STARTING UP AND/OR RECONFIGURING A PROGRAMMABLE FIELD MEASURING INSTRUMENT
PROCÉDÉ DE MISE EN SERVICE ET/OU DE RECONFIGURATION D'UN INSTRUMENT DE MESURE DE TERRAIN PROGRAMMABLE

(30) Priorität: 03.05.2007 DE 102007021099
(43) Veröffentlichungstag der Anmeldung: 10.02.2010
(73) Patentinhaber: Endress+Hauser (Deutschland) AG+Co. KG, 79576 Weil am Rhein (DE)
(72) Erfinder: BUDMIGER, Thomas, CH-4107 Ettingen (CH); DRAHM, Wolfgang, 85435 Erding (DE); KIRST, Michael, 79539 Lörrach (DE); STINGELIN, Simon, CH-4232 Fehren (CH)
(74) Vertreter: Andres, Angelika Maria
(86) Internationale Anmeldenummer: PCT/EP2008/054967
(87) Internationale Veröffentlichungsnummer: WO 2008/135397

(56) Entgegenhaltungen:
- WO-A-01/14968
- WO-A-03/017149
- WO-A-2004/001516
- US-A- 5 343 761
- US-A1- 2001 045 134
- US-A1- 2003 236 643

## Beschreibung

Die Erfindung betrifft ein Verfahren zum Inbetriebnehmen und/oder Rekonfigurieren eines programmierbaren Feldmeßgeräts von dem eine installierte Hardware wenigstens einen im Betrieb auf eine chemische und/oder physikalische Meßgröße eines schütt- und/oder fließfähigen Mediums, insb. einem Schüttgut, einer Flüssigkeit, einem Gas oder dergleichen, reagierenden Meßaufnehmer sowie einen im Betrieb mit diesem kommunizierenden Mikrocomputers aufweist.

In der industriellen Prozeß-Meßtechnik werden, insb. auch im Zusammenhang mit der Automation chemischer oder verfahrenstechnischer Prozesse und/oder der automatisierten Steuerung von industriellen Anlagen, prozeßnah installierte Meßgeräte, so genannte Feldmeßgeräte, eingesetzt, die der Erzeugung von chemisch und/oder physikalischen Prozeßmeßgrößen - analog oder digital - repräsentierenden Meßwerten sowie diese letztlich tragende, beispielsweise auch als Datentelegramme ausgebildete, Meßwertsignalen dienen. Bei den jeweils zu erfassenden Prozeßgrößen kann es sich beispielsweise, um einen Massendurchfluß, einen Volumendurchfluß, eine Dichte, eine Viskosität, einen Füll- oder einen Grenzstand, einen Druck oder eine Temperatur oder dergleichen, eines flüssigen, pulver-, dampf- oder gasförmigen Mediums handeln, das in einem entsprechenden Behälter, wie z.B. einer Rohrleitung oder einem Tank, geführt bzw. vorgehalten wird.

Zum Erfassen der jeweiligen Prozeßgrößen weisen Feldgeräte der vorgenannten Art jeweils einen entsprechenden physikalisch-elektrischen oder chemisch-elektrischen Meßaufnehmer sowie eine an den Meßaufnehmer angeschlossene Meßgerät-Elektronik auf.

Der Meßaufnehmer ist zumeist in eine Wandung des das Medium jeweils führenden Behälters oder der in den Verlauf einer das Medium jeweils führenden Leitung, beispielsweise eine Rohrleitung, eingesetzt und dient dazu, wenigstens ein mit der zu erfassenden Prozeßgröße entsprechend korrespondierendes elektrisches Meßsignal zu erzeugen.

Zum Verarbeiten des Meßsignals ist der Meßaufnehmer weiters mit einer in der Meßgerät-Elektronik vorgesehenen, der Weiterverarbeitung oder Auswertung des wenigstens einen Meßsignals wie auch der Generierung entsprechender Meßwertesignale dienenden Meßgerät internen Betriebs- und Auswerteschaltung verbunden. Bei einer Vielzahl von Feldgeräten der beschriebenen Art wird der Meßaufnehmer zum Erzeugen des Meßsignals im Betrieb zudem von einem von der in der Meßgerät-Elektronik entsprechend vorgesehenen Betriebsschaltung zumindest zeitweise generierten Treibersignal so angesteuert, daß er in einer für die Messung geeigneten Weise zumindest mittelbar oder aber auch über eine das Medium direkt kontaktierende Sonde praktisch unmittelbar auf das Medium einwirkt, um dort mit der zu erfassenden Meßgröße entsprechend korrespondierende Reaktionen hervorzurufen. Das Treibersignal kann dabei beispielsweise hinsichtlich einer Stromstärke, einer Spannungshöhe und/oder einer Frequenz entsprechend geregelt sein. Als Beispiele für solche aktiven, also ein elektrisches Treibersignal im Medium entsprechend umsetzende Meßaufnehmer sind im besonderen dem Messen von zumindest zeitweise strömenden Medien dienende Durchfluß-Meßaufnehmer, z.B. mit wenigstens einer vom Treibersignal angesteuerten, Magnetfeld erzeugenden Spule oder wenigstens einem vom Treibersignal angesteuerten Ultraschallsender, oder aber auch dem Messen und/oder Überwachen von Füllständen in einem Behälter dienende Füllstands- und/oder Grenzstandsaufnehmer, wie z.B. mit freistrahlender Mikrowellenantenne, Gouboun-Leitung oder vibrierendem Tauchkörper, zu nennen.

Zur Aufnahme der Meßgerät-Elektronik umfassen Feldmeßgeräte ferner ein vergleichsweise robustes, insb. schlag-, druck-, und/oder wetterfestes, Elektronik-Gehäuse. Dieses kann, wie z.B. in der US-A 63 97 683 oder der WO-A 00/36379 vorgeschlagen, vom Feldgerät entfernt angeordnet und mit diesem nur über eine flexible Leitung verbunden sein; es kann aber auch, wie z.B. in der EP-A 903 651 oder der EP-A 1 008 836 gezeigt, direkt am Meßaufnehmer oder einem den Meßaufnehmer separat einhausenden Meßaufnehmer-Gehäuse angeordnet sein. Oftmals dient dann das Elektronik-Gehäuse, wie beispielsweise in der EP-A 984 248, der US-A 45 94 584, der US-A 47 16 770 oder der US-A 63 52 000 gezeigt, auch dazu, einige mechanische und/oder elektromechanische Komponenten des Meßaufnehmers mit aufzunehmen, wie z.B. sich unter mechanischer Einwirkung betriebsmäßig verformende membran-, stab-, hülsen- oder rohrförmige Deformation- oder Vibrationskörper, vgl. hierzu auch die eingangs erwähnte US-B 63 52 000.

Bei Meßgeräten der vorgenannten Art ist die jeweilige Meßgerät-Elektronik üblicherweise über entsprechende elektrische Leitungen und/oder drahtlos per Funk mit einem vom Meßgerät zumeist räumlich entfernt angeordneten und zumeist auch räumlich verteilten übergeordneten elektronischen Datenverarbeitungssystem elektrisch verbunden, an das die vom jeweiligen Meßgerät erzeugten Meßwerte mittels eines diese entsprechend tragenden Meßwertesignals zeitnah weitergegeben werden.

Meßgeräte der beschriebenen Art sind zudem üblicherweise mittels eines innerhalb des übergeordneten Datenverarbeitungssystems vorgesehenen - leitungsgebundenen und/oder funkbasierten - Datenübertragungsnetzwerks miteinander und/oder mit entsprechenden elektronischen Prozeß-Steuerungen verbunden, beispielsweise vor Ort installierte Speicherprogrammierbare Steuerungen oder in einer entfernten Leitwarte installierte Prozeß-Leitrechnern, wohin die mittels des Feldmeßgeräts erzeugten und in geeigneter Weise digitalisierten und entsprechend codierten Meßwerte weitergesendet werden. Mittels Prozeß-Leitrechner können, unter Verwendung entsprechend installierter Softwarekomponenten, die übertragenen Meßwerte weiterverarbeitet und als entsprechende Meßergebnisse z.B. auf Monitoren visualisiert und/oder in Steuersignale für andere als Stellgeräte ausgebildete Feldgeräte, wie z.B. Magnet-Ventile, Elektro-Motoren etc., umgewandelt werden. Dementsprechend dient das Datenverarbeitungssystem üblicherweise auch dazu, das vom Meßgerät gelieferte Meßwertesignal entsprechend den Anforderungen nachgelagerter Datenübertragungsnetzwerke zu konditionieren, beispielsweise geeignet zu digitalisieren und gegebenenfalls in ein entsprechendes Telegramm umzusetzen, und/oder vor Ort auszuwerten. Dafür sind in solchen Datenverarbeitungssystemen mit den jeweiligen Verbindungsleitungen elektrisch gekoppelte Auswerteschaltungen vorgesehen, die die vom jeweiligen Meßgerät empfangenen Meßwerte vor- und/oder weiterverarbeiten sowie, falls erforderliche, geeignet konvertieren. Zur Datenübertragung dienen in solchen industriellen Datenverarbeitungssystemen zumindest abschnittsweise, insb. serielle, Feldbusse, wie z.B. FOUNDATION FIELDBUS, CAN, CAN-OPEN RACKBUS-RS 485, PROFIBUS etc., oder beispielsweise auch Netzwerke auf Basis des ETHERNET-Standards sowie die entsprechenden, zumeist anwendungsübergreifend standardisierten Übertragungs-Protokolle.

Üblicherweise kann neben einer solchen Prozeßvisualisierung, -überwachung und -steuerung mittels Leitrechner zudem auch eine Fernbedienung, -parametrierung und/oder-überwachung der angeschlossenen Feldmeßgeräte realisiert werden. Dementsprechend erlauben moderne Feldmeßgeräte neben der eigentlichen Meßwertübertragung auch die Übertragung von verschiedenen, im Feldmeßgerät verwendeten Einstellungs- und/oder Betriebsparmeter, wie z.B. Kalibrierdaten, Meßwertbereiche oder auch feldgerätintern ermittelte Diagnosewerte. Dem Rechnung tragend können über vorgenannte, zumeist hinsichtlich der Übertragungsphysik und/oder der Übertragungslogik hybride Datenübertragungsnetzwerke dem Feldmeßgerät zugewiesene Betriebsdaten zumeist ebenfalls versendet werden.

Neben den für die Verarbeitung und Konvertierung der von den jeweils angeschlossenen Meßgeräten gelieferten Meßwerte erforderlichen Auswerteschaltungen weisen übergeordnete Datenverarbeitungssysteme der beschriebene Art zumeist auch der Versorgung der angeschlossenen Feldmeßgräte mit elektrischer Energie dienende elektrische Versorgungsschaltungen auf, die eine entsprechende, ggf. direkt vom angeschlossenen Feldbus gespeiste, Versorgungsspannung für die jeweilige Meßgerät-Elektronik bereitstellen und die daran angeschlossenen elektrische Leitungen sowie die jeweiligen Meßgerät-Elektroniken durchfließende elektrische Ströme treiben. Eine Versorgungsschaltung kann dabei beispielsweise genau einem Feldmeßgerät jeweils zugeordnet und zusammen mit der dem jeweiligen Meßgerät zugeordneten Auswerteschaltung - beispielsweise zu einem entsprechenden Feldbusadapter vereint - in einem gemeinsamen, z.B. als Hutschienen-Modul ausgebildeten, Gehäuse untergebracht sein. Es ist aber durchaus auch üblich, solche übergeordneten Auswerteschaltungen und Versorgungsschaltungen jeweils in separaten, ggf. voneinander räumlich entfernten Gehäusen unterzubringen und über externe Leitungen miteinander entsprechend zu verdrahten.

Weiterführende Beispiele für derartige, dem Fachmann an und für sich bekannte Feldmeßgeräte oder auch solchen Meßanordnungen, wie sie im Zusammenspiel von Feldmeßgerät und einem entsprechenden Datenverarbeitungssystem gebildet sind, sind u.a. in der WO-A 06/111573, der WO-A 06/002910, der WO-A 03/048874, der WO-A 03/098154, WO-A 03/017149, der WO-A 02/44661, der WO-A 02/45045, der WO-A 02/103327, der WO-A 02/086426, der WO-A 01/02816, der WO-A 01/14968, der WO-A 00/77585, der WO-A 00/77583, der WO-A 00/48157, der WO-A 00/36379, der WO-A 00/14485, der WO-A 95/16897, der WO-A 88/02853, der WO-A 88/02476, der US-B 71 34 348, der US-B 71 33 727, der US-B 71 24 239, der US-B 70 75 313, der US-B 70 73 396, der US-B 70 40 181, der US-B 70 32 045, der US-B 68 89 150, der US-B 68 54 055, der US-B 67 99 476, der US-B 67 76 053, der US-B 67 69 301, der US-B 67 63 729, der US-B 66 33 826, der US-B 66 01 005, der US-B 65 77 989, der US-B 66 62 120, der US-B 66 40 308, der US-B 66 34 238, der US-B 66 01 005, der US-B 65 74 515, der US-B 65 64 612, der US-B 65 35 161, der US-B 65 12 358, der US-B 65 05 519, der US-B 64 87 507, der US-B 64 80 131, der US-B 64 76 522, der US-B 63 97 683, der US-B 63 52 000, der US-B 63 11 136, der US-B 62 85 094, der US-B 62 69 701, der US-B 62 36 322, der US-A 61 40 940, der US-A 60 14 100, der US-A 60 06 609, der US-A 59 59 372, der US-A 57 96 011, der US-A 57 42 225, der US-A 57 42 225, der US-A 57 06 007, der US-A 56 87 100, der US-A 56 72 975, der US-A 56 04 685, der US-A 55 35 243, der US-A 54 69 748, der US-A 54 16 723, der US-A 53 63 341, der US-A 53 59 881, der US-A 52 31 884, der US-A 52 07 101, der US-A 51 31 279, der US-A 50 68 592, der US-A 50 65 152, der US-A 50 52 230, der US-A 49 26 340, der US-A 48 50 213, der US-A 47 68 384, der US-A 47 16 770, der US-A 46 56 353, der US-A 46 17 607, der US-A 45 94 584, der US-A 45 74 328, der US-A 45 24 610, der US-A 44 68 971, der US-A 43 17 116, der US-A 43 08 754, der US-A 38 78 725, der US-A 2006/0179956, der US-A 2006/0161359, der US-A 2006/0112774, der US-A 2006/0096390, der US-A 2006/0081067, der US-A 2005/0139015, der US-A 2004/0117675, der EP-A 1 158 289, der EP-A 1 147 463, der EP-A 1 058 093, der EP-A 984 248, der EP-A 591 926, der EP-A 525 920, der DE-A 103 25 277, der DE-A 44 12 388 oder der DE-A 39 34 007 ausführlich und detailliert beschrieben.

Bei modernen Feldmeßgeräten ist die Betriebs- und Auswerteschaltung üblicherweise mittels wenigstens eines re-programmierbaren Mikrocomputers sowie damit entsprechend ausgeführtem Programmcode gebildet. Der Programmcode ist zumindest anteilig mittels Software bereitgestellt. Die Software ist üblicherweise zumindest anteilig als hardwarenahe, herkömmlich auch als Firmware bezeichnete Software ausgebildet und wird vor der Inbetriebnahme des Feldmeßgerätes in nicht-flüchtigen Speichern, z.B. einen PROM oder einen EPROM, des Mikrocomputers persistent einprogrammiert, um gegebenenfalls für den Betrieb des Feldmeßgerätes in einen als Arbeitsspeicher dienenden flüchtigen Datenspeicher, z.B. einen RAM, geladen zu werden. Persistent bedeutet hierbei, daß die Software einerseits auch nach einem durch einen Ausfall der Energieversorgung bedingten Neustart des Mikrocomputers gespeichert und somit ausführbar bleibt, und daß andererseits die innerhalb des Meßgeräts gespeicherte Software teilweise umprogrammiert oder auch gänzlich überschrieben werden kann. Während der Inbetriebnahme wird der Mikrocomputer zumeist unter Verwendung das Aufstarten realiserender, festprogrammierter Firmware, sogenannter Bootstrap Loader, soweit in Gang gesetzt, daß zumindest eine Kommunikation des Feldmeßgeräts mit dem übergordneten Datenverarbeitungssystems und die Aktivierung weiterer, für den eigentlichen Meßbetrieb erforderlicher Softwarekomponenten ermöglicht ist.

Infolge der Verwendung immer leistungsfähiger werdenden Mikro- und/oder Signalprozessoren für solche programmierbaren Mikrocomputer können die im Feldmeßgerät realisierten Funktionalitäten, insb. auch Meßsignalverarbeitung wie auch die darauf aufsetzende Ermittlung der Meßwerte oder deren Visualisierung vor Ort, einerseits sehr komplex ausgebildet werden, anderseits aber auch in hohem Maße anwendungsspezifisch, insb. auch branchen- und/oder kundenspezifisch, individualisierbar sein; letzteres gegebenenfalls auch erst vor Ort nach Installation des Feldmeßgeräts und dessen Inbetriebnahme. Einhergehend mit dem Leistungszuwachs der Mikrocomputer können in modernen Feldmeßgeräten zudem auch über die eigentliche Meßwertgenerierung als primäre Funktion von Feldmeßgeräten hinausgehende Funktionalitäten in zunehmendem Maße realisiert werden, die ein effizientes und sicheres Führen des zu beobachtenden Prozesses noch mehr unterstützen. Solche sekundären Funktionalitäten können beispielsweise das Abspeichern von Meß- und/oder Betriebsdaten in Historienspeichern, das Ermitteln von komplexen Meßgrößen im Zusammenspiel mit andern Feldgeräten, Steuerungs- und Regelungsfunktionen im Zusammenwirken mit Prozeß- Stellglieder, wie etwa Ventilen oder Pumpen, auf das Feldmeßgerät selbst gerichtete interne und/oder auf die überwachte industrielle Prozeßanlage gerichtete externe Überwachungs-, Validierungs- und/oder Diagnosefunktionen etc. sein. Ferner können solche zusätzlichen Funktionalitäten z.B. auch die Inbetriebnahme des Feldmeßgerätes sowie dessen Anbindung an das Datenübertragungs-System betreffen. Aufgrund dieser erweiterten Funktionalität von modernen Feldmeßgeräten können in zunehmendem Maße Prozeß leitende Funktionen zur Feld-Ebene hin verlagert und somit die Prozeßführungs-Systeme entsprechend dezentral organisiert werden. Beispiele für solche re-programmierbar und insoweit re-konfigurierbar ausgelegten Feldmeßgeräte, deren Funktionalitäten auch nach Installation und Inbetriebnahme, insb. auch während des Betriebs, anwendungsspezifisch anpaßbar sind, sind u.a. in der bereits erwähnten US-B 71 24 239, der US-B 66 33 826, der US-B 68 54 055, der WO-A 01/14968, der WO-A 00/77585, der WO-A 00/77583, der WO-A 00/48157, der WO-A 03/098154 oder der WO-A 06/111573 gezeigt.

Der Zuwachs an in das Feldmeßgerät hineinverlagerter Funktionalität einerseits wie auch die zunehmende Individualisierung von Feldmeßgeräten der beschriebenen Art anderseits bedeuten für die Hersteller neben einem erhöhten Entwicklungs- und Herstellungsaufwand, im besonderen auch einen erheblichen Logistikaufwand. Gleichermaßen stellt aber auch die Auswahl der richtigen Funktionalitäten für den Anwender selbst einen hohen Aufwand bei der Spezifizierung der Anforderungen an das zu installierende Feldmeßgerät dar, dies sowohl wegen der kaum mehr zu überblickbaren Vielfalt an derzeit oder auch künftig angebotenen Grund- und Spezialfunktionalitäten als auch aufgrund hoher Variabilität in den mittels des jeweiligen Feldmeßgeräts zu überwachenden Proßanlagen und/oder -abläufen, beispielsweise infolge betriebsgemäß variierender Medien oder, insb. hinsichtlich iheres Fließindexes und oder ihrer Zusammensetzung, variierender Medientypen. Dem Rechnung tragend werden von Herstellern solcher Feldmeßgräte zunehmend die Planung unterstützende Programme angeboten, mit deren Hilfe die für die mittels des Feldmeßgeräts gebildete Prozeß-Meßstelle relevanten Parameter vorab sehr komfortabel ermittelt werden können, gegebenenfalls auch im Dialog mit einem herstellerseitig installierten Hostrechner via Internet. Basierend darauf kann gegebenenfalls auch eine Bestellung eines solchen, hinsichtlich der tatsächlichen Anwendung optimierten Feldmeßgeräts unmittelbar ausgelöst werden. Beispiel für solche - gegebenenfalls auch via Internet kommunizierdende - Planungs- und Bestellprogramme sind u.a. in der US-B 68 89 150, der US-A 2007/0067512, oder der US-A 2006/0173836 oder der WO-A 02/44661 beschrieben.

Ein Nachteil derartiger Planungs- und Bestellprogramme ist allerdings darin zusehen, daß einerseits zur Optimierung des Feldmeßgeräts, insb. der Anpassung von dessen mittels des Mikrocomputers zu realisierenden Funktionalitäten, eine erhebliche, gelegentlich unzumutbar hohe Anzahl von die Anwendung spezifizierenden Parametern abgefragt werden müßte, anderseits zahlreiche die eigentliche Meßstelle spezifizierende Parameter zum Zeitpunkt der Bestellung noch gar nicht verfügbar sind, sei es aufgrund des noch fehlenden Anlagenteils und/oder aufgrund noch fehlender Information über die Wechselwirkungen zwischen Prozeßanlage und zu bestellendem Feldmeßgerät. Des weiteren ist zudem davon auszugehen, daß infolge von Weiterentwicklungen innerhalb der Prozeßanlage wie auch der Verbesserung von Meßwert generierden Algorithmen für Feldmeßgeräte der in Rede stehenden Art wiederkehrend eine Rekonfigurierung der installierten Hardware durch Aufspielen von neuer z.B. einzelne Einstellungsparameter, einzelen Berechnungsroutinen, umfängliche Betriebs- und Verarbeitungsprogramme oder Kommunikationsroutinen bereitstellender Software erfolgen wird.

Der Erfindung liegt daher als Aufgabe zugrunde, die Inbetriebnahme und/oder Rekonfigurierung von Feldmeßgeräten der beschriebenen Art dahingehend zu vereinfachen, daß damit auch bei a priori nur in geringem Maße vorhander Information über die eigentliche Meßstelle, insb. auch die Wechselwirkungen zwischen dem Feldmeßgerät und dem Medium, und mit vergleichsweise geringem Aufwand seitens des Anwenders ein möglichst optimal an den jeweils zu überwachenden Prozeß, insb. auch das jeweilige Medium und/oder die jeweilige Einbausituation, angepaßtes, gegebenenfalls auch nachträglich erweiterbares Feldmeßgerät zur Verfügung gestellt werden kann.

Zur Lösung der Aufgabe besteht die Erfindung in einem.Verfahren zum Inbetriebnehmen und/oder Rekonfigurieren eines programmierbaren Feldmeßgeräts von dem eine installierte Hardware wenigstens einen im Betrieb auf eine chemische und/oder physikalische Meßgröße eines schütt- und/oder fließfähigen Mediums, insb. einem Schüttgut, einer Flüssigkeit, einem Gas oder dergleichen, reagierenden Meßaufnehmer sowie einen im Betrieb mit diesem kommunizierenden Mikrocomputers aufweist. Das erfindungsgemäße Verfahren umfaßt dabei folgende Schritte:

- Installieren des Feldmeßgeräts mittels des Meßaufnehmers an und/oder in einem dem Führen und/oder Vorhalten von schütt- und/oder fließfähigen Medien, insb. Schüttgütern, Flüssigkeiten, Gasen oder dergleichen, dienenden, insb. als eine Rohrleitung, ein Gerinne, ein Tank, ein Becken oder dergleichen ausgebildeten, Prozeßgefäß zum Bilden einer Prozeß-Meßstelle;

- Aufstarten des Mikrocomputers und Aktivieren einer, insb. zumindest anteilig hardwarenahen, in einem innerhalb des Feldmeßgeräts vorgesehenen, insb. nicht-flüchtigen, ersten Speicher vorgehaltenen, Grundfunktionalitäten des Feldmeßgeräts zumindest anteilig bereitstellenden Basis-Software in der Weise, daß die Basis-Software mittels des Mikrocomputers ausführbar ist, so daß im Zusammenspiel von Basis-Software und im Feldmeßgerät installierter Hardware die Grundfunktionalitäten des Feldmeßgeräts verfügbar sind;

- Transferieren wenigstens eines die Prozeß-Meßstelle, insb. auch eine momentane Einbausituation des Feldmeßgeräts und/oder ein im Prozeßgefäß befindliches Medium, zumindest näherungsweise identifizieren, insb. auch spezifizierenden, im Feldmeßgerät zumindest temporär vorgehaltenen, beispielsweise unter Verwendung von im Mikrocomputer ausgeführter Basis-Software ermittelten, initialen Identifikationsparametersatz zu einem extern des Feldmeßgeräts, insb. von diesem entfernten und/oder räumlich verteilten, übergeordneten elektronischen Datenverarbeitungssystem unter Verwendung von im Mikrocomputer ausgeführter Basis-Software;

- Selektieren wenigstens einer in einem, insb. extern des Feldmeßgeräts von diesem entfernt und/oder intern des Datenverarbeitungssystem angeordneten, zweiten Speicher vorgehaltenen Upgrade-Software, die über die Grundfunktionalitäten hinausgehende, insb. feldmeßgerät- und/oder anwenderspezifische, Custom-Funktionalitäten für das Feldmeßgerät bereitstellt, aus einem Ensemble von, insb. fest vorkonfektionierten oder konfektionierbaren, Software-Produkten unter Verwendung des wenigstens einen initialen, insb. bereits als Bestellcode für Software ausgebildeten, Identifikationsparametersatzes;

- Transferieren von der Prozeß-Meßstelle, insb. der Einbausituation des Feldmeßgeräts und/oder dem Prozeßgefäß befindlichen Medium, angepaßter selektierter Upgrade-Software in einen innerhalb des Feldmeßgeräts vorgesehenen, insb. nicht-flüchtigen, dritten Speicher; sowie

- Aktivieren von, insb. persistent und/oder permanent gespeicherter, Upgrade-Software in der Weise, daß zumindest die, insb. zumindest anteilig hardwarenahe, transferierte Upgrade-Software mittels des Mikrocomputers ausführbar ist, so daß im Zusammenspiel von Upgrade-Software und im Feldmeßgerät installierter Hardware Custom-Funktionalitäten des Feldmeßgeräts verfügbar sind.

Nach einer ersten Ausgestaltung des Verfahrens der Erfindung ist vorgesehen, daß der die Upgrade-Software vorhaltende, insb. nicht-flüchtige, zweite Speicher extern des Feldmeßgeräts, insb. von diesem entfernt und/oder intern des Datenverarbeitungssystem, angeordnet ist.

Nach einer zweiten Ausgestaltung des Verfahrens der Erfindung umfaßt dieses weiters einen Schritt des Anbindens des Feldmeßgeräts an das übergeordnete elektronischen Datenverarbeitungssystem in der Weise, daß Daten zwischen Feldmeßgerät und Datenverarbeitungssystem, insb. leitungsgebunden und/oder drahtlos per Funk, kommunizierbar sind.

Nach einer dritten Ausgestaltung des Verfahrens der Erfindung umfaßt dieses weiters einen Schritt des Herstellens einer Kommunikationsverbindung zwischen dem Feldmeßgerät und dem Datenverarbeitungssystem zum, insb. leitungsgebundenen und/oder drahtlosen, Übertragen des wenigstens einen initialen Identifikationsparametersatzes und/oder der Upgrade-Software. Nach einer vorteilhaften Weiterbildung dieser Ausgestaltung ist vorgesehn, die Kommunikationsverbindung zumindest abschnittsweise mittels einer digitalen, insb. als das Feldmeßgerät auch speisenden Zweidraht-Leitung ausgebildeten, Datenleitung und/oder zumindest abschnittsweise mittels einer Funkverbindung zubilden.

Nach einer vierten Ausgestaltung des Verfahrens der Erfindung ist vorgesehen, daß der die Upgrade-Software vorhaltende zweite Speicher in einem im Datenverarbeitungssystem vorgesehenen, insb. in einer Leitwarte plazierten, Hostrechner installiert ist.

Nach einer fünften Ausgestaltung des Verfahrens der Erfindung ist vorgesehen, daß der die Upgrade-Software vorhaltende zweite Speicher mittels einer Festplatte, einer CD-ROM, einer Diskette, einer DVD, einem Magnetband oder einem anderen Massenspeicher gebildet ist.

Nach einer sechsten Ausgestaltung des Verfahrens der Erfindung ist vorgesehen, daß der Mikrocomputer mittels wenigstens eines Mikroprozessors und/oder mittels eines Signalprozessors gebildet ist.

Nach einer siebenten Ausgestaltung des Verfahrens der Erfindung ist vorgesehen, daß der Mikrocomputer wenigstens einen flüchtigen, insb. als Arbeitsspeicher für einen im Mikrocomputer vorgesehenen Mikroprozessor und/oder für einen im Mikrocomputer vorgesehenen Signalprozessor dienenden, Speicher aufweist.

Nach einer achten Ausgestaltung des Verfahrens der Erfindung ist vorgesehen, daß der im Feldmeßgerät vorgesehene erste Speicher für Basis-Software als nicht-flüchtiger, insb. persistenter, Speicher ausgebildet ist.

Nach einer neunten Ausgestaltung des Verfahrens der Erfindung ist vorgesehen, daß der im Feldmeßgerät vorgesehene dritte Speicher für Custom-Software als flüchtiger Speicher ausgebildet ist. Nach einer Wieterbildung dieser Ausgestaltung der Erfindung ist zudem ferner vorgesehen, daß der Schritt des Aktivierens der Basis-Software einen Schritt des Ladens von zumindest Teilen der Basis-Software in den flüchtigen Arbeitsspeicher umfaßt und/oder daß der Schritt des Aktivierens der Upgrade-Software einen Schritt des Ladens von zumindest Teilen der Upgrade-Software in den flüchtigen Arbeitsspeicher umfaßt.

Nach einer zehnten Ausgestaltung des Verfahrens der Erfindung umfaßt dieses weiters einen Schritt des Eingebens eines Start-Befehls, der den Schritt des Transferierens des wenigstens einen initialen Identifikationsparametersatzes zum Datenverarbeitungssystem, insb. zu einem darin vorgesehenen Hostrechner, zumindest mittelbar, insb. zeitnah, auslöst.

Nach einer elften Ausgestaltung des Verfahrens der Erfindung umfaßt dieses weiters einen Schritt des Erzeugen wenigstens eines Meßsignals mittels des Meßaufnehmers.

Nach einer zwölften Ausgestaltung des Verfahrens der Erfindung umfaßt dieses weiters einen Schritt des Ermittelns des initiale Identifikationsparametersatzes unter Verwendung von im Mikrocomputer ausgeführter Basis-Software, insb. auch unter Verwendung des wenigstens einen Meßsignals und/oder Berücksichtigung eines von einem Anwender im Dialog mit dem Feldmeßgerät mittels einer, insb. unmittelbar im Feldmeßgerät vorgesehenen, Mensch-Maschine-Schnittstelle vorgegebenen Applikationsparameters. Nach einer vorteilhaften Weiterbildung dieser Ausgestaltung des Verfahrens wird der initiale Identifikationsparametersatzes, dabei in der Weise ermittelt, daß er zumindest anteilig eine momentane Einbausituation des installierten Feldmeßgeräts, insb. dessen Einbaulage, dessen Nähe zu einem Störer, wie einem Ventil, einer Pumpe, einem Rührer oder dergleichen, und/oder ein im Prozeßgefäß befindliches Medium, insb. dessen Strömungstyp, dessen Zusammensetzung oder dergleichen, momentan repräsentiert.

Nach einer dreizehnten Ausgestaltung des Verfahrens der Erfindung ist vorgesehen, daß die Upgrade-Software zumindest einen Datensatz zu ändernder Einstellparameter für das Feldmeßgerät, insb. für eine wenigstens ein mittels des Meßaufnehmers erzeugtes Meßsignal konditionierende Signaleingangsstufe und/oder für einen mittels des Mikrocomputers ausgeführten, den wenigstens einen Meßwert numerisch berechnende Auswertalgorithmus und/oder für eine wenigstens ein Treibersignal für den Meßaufnehmer liefernden Signalausgangstufe, liefert. Nach einer vorteilhaften Weiterbildung dieser Ausgestaltung des Verfahrens sind die zu ändernden Einstellparameter zumindest anteilig mittels vorab am nämlichen Feldmeßgerät und/oder an einem typgleichen Feldmeßgerät durchgeführter Kalibriermessungen generiert worden.

Nach einer vierzehnten Ausgestaltung des Verfahrens der Erfindung umfaßt dieses weiters einen einen Schritt des Ermittelns wenigstens eines verfeinerten Identifikationsparametersatzes, der die im Zusammenspiel von Feldmeßgerät und Prozeßgefäß gebildete Prozeß-Meßstelle, insb. auch eine momentane Einbausituation des Feldmeßgeräts und/oder ein im Prozeßgefäß befindliches Medium, momentan, insb. genauer als der initiale Identifikationsparametersatz, repräsentiert, unter Verwendung von im Mikrocomputer ausgeführter Upgrade-Software und/oder Basis-Software. Nach einer vorteilhaften Weiterbildung dieser Ausgestaltung des Verfahrens umfaßt dieses weiters einen Schritt des Transferierens des wenigstens einen verfeinerten Identifikationsparametersatzes zum übergeordneten Datenverarbeitungssystem unter Verwendung von im Mikrocomputer ausgeführter Upgrade-Software und/oder Basis-Software. Unter Verwendung des wenigstens einen transferierten verfeinerten Identifikationsparametersatzes kann wenigstens eine Upgrade-Software, die eine über die Grundfunktionalitäten des Feldmeßgeräts hinausgehende sowie aktuell im Feldmeßgerät verfügbare Custom-Funktionalitäten ergänzende oder ersetzende Custom-Funktionalitäten für das Feldmeßgerät bereitstellt, aus einer Vielzahl von im Datenverarbeitungssystem gespeicherten Software-Produkten selektiert werden. Diese selektierte, insb. auch hardwarenahe, Upgrade-Software kann beispielsweise in den innerhalb des Feldmeßgeräts vorgesehenen dritten Speicher und/oder in einen innerhalb des Feldmeßgeräts vorgesehenen, insb. nicht-flüchtigen, vierten Speicher transferiert werden.

Nach einer fünfzehnten Ausgestaltung des Verfahrens der Erfindung umfaßt dieses weiters einen einen Schritt des Ermittelns wenigstens eines verfeinerten Identifikationsparametersatzes, der die im Zusammenspiel von Feldmeßgerät und Prozeßgefäß gebildete Prozeß-Meßstelle, insb. auch eine momentane Einbausituation des Feldmeßgeräts und/oder ein im Prozeßgefäß befindliches Medium, momentan, insb. genauer als der initiale Identifikationsparametersatz, repräsentiert, unter Verwendung von im Mikrocomputer ausgeführter Upgrade-Software und/oder Basis-Software sowie einen Schritt des Erzeugens eines Start-Befehls, der den Schritt des Ermittelns des wenigstens einen verfeinerte Identifikationsparametersatzes zumindest mittelbar, insb. zeitnah, auslöst. Nach einer Weiterbildung dieser Ausgestaltung des Verfahrens ist ferner vorgesehen, daß dieses weiters einen Schritt des Verwendens einer mit dem Feldmeßgerät kommunizierenden, insb. an dieses elektrisch angeschlossenen und/oder darin vorgesehenen, Mensch-Maschine-Schnittstelle zum Erzeugen des Start-Befehls, insb. im Dialog mit dem Feldmeßgerät und/oder einen Schritt des Erzeugens eines Start-Befehls, der den Schritt des Transferierens des wenigstens einen initialen Identifikationsparametersatzes zum Hostrechner zumindest mittelbar, insb. zeitnahe und/oder in Echtzeit, auslöst, umfaßt. Zum Erzeugen des Start-Befehls, insb. im Dialog mit dem Feldmeßgerät, kann beispielsweise eine mit dem Feldmeßgerät kommunizierenden, insb. an dieses elektrisch angeschlossenen und/oder darin vorgesehenen, Mensch-Maschine-Schnittstelle verwendet werden.

Nach einer sechzehnten Ausgestaltung des Verfahrens der Erfindung umfaßt dieses weiters einen einen Schritt des Ermittelns wenigstens eines verfeinerten Identifikationsparametersatzes, der die im Zusammenspiel von Feldmeßgerät und Prozeßgefäß gebildete Prozeß-Meßstelle, insb. auch eine momentane Einbausituation des Feldmeßgeräts und/oder ein im Prozeßgefäß befindliches Medium, momentan, insb. genauer als der initiale Identifikationsparametersatz, repräsentiert, unter Verwendung von im Mikrocomputer ausgeführter Upgrade-Software und/oder Basis-Software sowie einen Schritt des Vergleichens des wenigstens einen verfeinerten Identifikationsparametersatzes mit einem vorgegebenen, die Hardware des Feldmeßgeräts und/oder die im Feldmeßgerät momentan ausführbare Software, insb. inform einer Gerätekennzahl oder einer Versionsnummer, repräsentierenden Geräteparameters. Nach einer Weiterbildung dieser Ausgestaltung des Verfahrens ist ferner vorgesehen, daß dieses weiters einen Schritt des Generierens einer Meldung, die signalisert, ob der Identifikationsparametersatz und der Geräteparameter übereinstimmen, und/oder einen Schritt des Generierens einer Meldung, die signalisert, ob der Identifikationsparametersatz und der Geräteparameter voneinander abweichen, umfaßt.

Nach einer siebzehnten Ausgestaltung des Verfahrens der Erfindung umfaßt dieses weiters einen Schritt des Erzeugen wenigstens eines Meßsignals mittels des Meßaufnehmers sowie einen Schritt des Ermittelns wenigstens eines verfeinerten Identifikationsparametersatzes, der die im Zusammenspiel von Feldmeßgerät und Prozeßgefäß gebildete Prozeß-Meßstelle, insb. auch eine momentane Einbausituation des Feldmeßgeräts und/oder ein im Prozeßgefäß befindliches Medium, momentan, insb. genauer als der initiale Identifikationsparametersatz, repräsentiert, unter Verwendung von im Mikrocomputer ausgeführter Upgrade-Software und/oder Basis-Software. Nach einer Weiterbildung dieser Ausgestaltung des Verfahren ist ferner vorgesehen, den verfeinerten Identifikationsparametersatz auch unter Verwendung des wenigstens einen Meßsignals und/oder des initialen Identifikationsparametersatzes zu ermitteln. Das Meßsignal kann dabei beispielsweise auch zum Erzeugen eines Start-Befehls, der den Schritt des Ermittelns des wenigstens einen verfeinerte Identifikationsparametersatzes zumindest mittelbar, insb. zeitnah, auslöst und/oder zum Erzeugen eines Start-Befehls, der den Schritt des Transferieren des wenigstens einen verfeinerten Identifikationsparametersatzes zum Datenverarbeitungssystem zumindest mittelbar, insb. zeitnah, auslös, verwendet werden..

Nach einer achtzehnten Ausgestaltung des Verfahrens der Erfindung umfaßt dieses weiters einen Schritt des Erzeugen wenigstens eines Meßsignals mittels des Meßaufnehmers sowie einen Schritt des Digitalisierens des wenigstens einen Meßsignals zum Erzeugen eines mit dem wenigstens einen Meßsignal korrespondierenden digitalen Meßsignals. Nach einer Weiterbildung dieser Ausgestaltung der Erfindung ist ferner vorgesehen, daß zumindest auch der Schritt des Erzeugens des initialen Identifikationsparametersatzes weiters einen Schritt des Verwendens des digitalen Meßsignals umfaßt. Nach einer anderen Weiterbildung dieser Ausgestaltung des Verfahrens umfaßt dieses weiters einen Schritt des Erzeugens wenigstens einer, insb. in einem internen Speicher des Feldmeßgeräts vorgehaltenen, mit Abschnitten des Meßsignals korrespondierenden, diskreten Signalfolge. Diese wiederum kann im weitern z.B. auch zum Erzeugens des Identifikationsparametersatzes verwendet werden. Des weiteren ist vorgesehen, daß die Grundfunktionalitäten des Feldmeßgeräts Berechnungsroutinen zum Vergleichen von mit Abschnitten des Meßsignals korrespondierenden diskreten Signalfolgen mit vorab für verschiedene Applikationen, insb. für verschiedene Einbausituationen und/oder für verschiedene Medien, ermittelte und entsprechend klassifizierte Signal-Prototypen umfassen. Das Erzeugens des Identifikationsparametersatzes kann dann beispielswies auch durch Vergleichen diskreter Signalfolgen mit einem oder mehreren solcher Signal-Prototypen erfolgen.

Nach einer neunzehnten Ausgestaltung des Verfahrens der Erfindung umfaßt dieses weiters einen Schritt des Erzeugens wenigstens eines Meßsignals mittels des Meßaufnehmers, wobei die Grundfunktionalitäten des Feldmeßgeräts Berechnungsroutinen zur Spektralanalyse zumindest des Meßsignals umfassen, insb. basierend auf einer diskreten Fourier-Transformation des Meßsignals und/oder einer diskreten Autokorrelation des Meßsignals. Zum Erzeugen des Identifikationsparametersatzes kann im weiteren auch ein diskretes Amplitudenspektrums des Meßsignals verwendet werden, beispielsweise anhand wenigstens eines, insb. an einer vorgegebenen Signalfrequenz und/oder an einer vorgegebenen Signalamplitude ausgewählten, spektralen Amplitudenwerts.

Nach einer zwanzigsten Ausgestaltung des Verfahrens der Erfindung ist vorgesehen, daß die Upgrade-Software Einstellungsparameter für installierte Hardware und/oder, insb. adaptive, digitale Filter repräsentierende Rechenalgorithmen bereitstellt.

Nach einer einundzwanzigsten Ausgestaltung des Verfahrens der Erfindung ist vorgesehen, daß die Upgrade-Software eine, insb. über eine den Grundfunktionalitäten innewohnende, der Ermittlung zumindest des wenigstens einen initialen Identifikationsparametersatzes Diagnosefunktion hinausgehende, erweiterte Diagnosefunktion bereitstellt.

Nach einer zweiundzwanzigsten Ausgestaltung des Verfahrens der Erfindung umfaßt dieses weiters einen Schritt des Erzeugens wenigstens eines Meßsignals mittels des Meßaufnehmers sowie einen Schritt des Ermittelns wenigstens eines digitalen Meßwerts, der die wenigstens eine Meßgröße momentan repräsentiert, basierend auf dem wenigstens einen Meßsignal und im Mikrocomputer ausgeführter Upgrade- Software. Nach einer Weiterbildung dieser Ausgestaltung des Verfahrens umfaßt dieses weiters einen Schritt des Ermittelns wenigstens eines digitalen Meßwerts, der die wenigstens eine Meßgröße momentan repräsentiert, basierend auf dem wenigstens einen Meßsignal und im Mikrocomputer ausgeführter Basis- Software. Nach einer anderen Weiterbildung dieser Ausgestaltung des Verfahrens umfaßt dieses weiters einen Schritt des Ermittelns wenigstens eines ersten digitalen Meßwerts, der die wenigstens eine Meßgröße momentan repräsentiert, basierend auf dem wenigstens einen Meßsignal und im Mikrocomputer ausgeführter Basis- Software, und einen Schritt des Ermittelns wenigstens eines zweiten digitalen Meßwerts, der die wenigstens eine Meßgröße momentan repräsentiert, basierend auf dem wenigstens einen Meßsignal und im Mikrocomputer ausgeführter Upgrade- Software. Im besonderen ist dabei vorgesehen, daß der erste digitale Meßwert und der zweite digitale Meßwert insoweit typgleich sind, als sie dieselbe Meßgröße, insb. mit gleicher Maßeinheit, repräsentieren.

Nach einer dreiundzwanzigsten Ausgestaltung des Verfahrens der Erfindung umfaßt dieses weiters einen Schritt des Erzeugens wenigstens eines Meßsignals mittels des Meßaufnehmers, einen Schritt des Ermittelns wenigstens eines digitalen Meßwerts, der die wenigstens eine Meßgröße momentan repräsentiert, basierend auf dem wenigstens einen Meßsignal und im Mikrocomputer ausgeführter Upgrade-Software, sowie einen Schritt des Herstellens einer Kommunikationsverbindung zwischen dem Feldmeßgerät und dem übergeordneten elektronischen Datenverarbeitungssystem zum, insb. leitungsgebundenen und/oder drahtlosen, Übertragen des wenigstens digitalen Meßwerts. Nach einer Weiterbildung dieser Ausgestaltung des Verfahrens umfaßt dieses weiters einen Schritt des Transferierens des Meßwerts zum elektronischen Datenverarbeitungssystem. Zudem ist ferner vorgesehen, daß die Kommunikationsverbindung zumindest abschnittsweise mittels einer digitalen, insb. als das Feldmeßgerät auch speisenden Zweidraht-Leitung ausgebildeten, Datenleitung und/oder zumindest abschnittsweise mittels einer Funkverbindung gebildet ist.

Nach einer vierundzwanzigsten Ausgestaltung des Verfahrens der Erfindung umfaßt dieses weiters einen Schritt des Abspeicherns wenigstens eines mittels des Feldmeßgeräts erzeugten, die Prozeß-Meßstelle zumindest näherungsweise identifizieren Identifikationsparametersatzes innerhalb des übergeordneten elektronischen Datenverarbeitungssystems.

Verfahren nach dem vorherigen Anspruch, weiters umfassend einen Schritt des Hinzufügens wenigstens einer weiteren Upgrade-Software zum Ensemble von Software-Produkten und einen Schritt des Verwendens des wenigstens einen im Datenverarbeitungssystem gespeicherten Identifikationsparametersatzes zum Generieren einer, insb. direkt an das Feldmeßgerät adressierten, Meldung, die das Hinzufügen der wenigstens einen weiteren Upgrade-Software zum Ensemble signalisert. Nach einer Weiterbildung dieser Ausgestaltung des Verfahrens ist vorgesehen, daß der Schritt des Genrierens der Meldung zumindest dann ausgeführt wird, wenn die hinzugefügrte Upgrade-Software zu der Prozeß-Meßstelle paßt.

Nach einer fünfundzwanzigsten Ausgestaltung des Verfahrens der Erfindung ist vorgesehen, daß das Feldmeßgerät weiters ein Meßaufnehmer-Gehäuse, in dem Meßaufnehmer zumindest anteilig untergbracht ist, sowie ein Elektronik-Gehäuse, in dem zumindest der Mikrocomputer untergebracht ist. Nach einer Weiterbildung dieser Ausgestaltung des Verfahrens ist ferner vorgesehen, daß Meßaufnehmer-Gehäuse und Elektronik-Gehäuse, insb. im wesentlichen starr, miteinander verbunden sind.

Ein Grundgedanke der Erfindung besteht darin, Feldmeßgeräte und somit auch die damit jeweils gebildete Prozeß-Meßstellen durch Transferieren und Aktivieren einer anwendungspezifische Custom-Funktionalitäten bereitstellenden Upgrade-Software praktisch erst unmittelbar während der Inbetriebnahme im herkömmlichen Sinne zu Ende zu projektieren. Somit kann die Projektphase für die Prozeß-Meßstelle von der Planung über die Bestellung bis hin zur Installation und Inbetriebnahme einschließlich allfälliger Re-Konfigurationen des installierten Feldmeßgeräts, insgesamt in erheblichem Maße verkürzt werden; dies im besonderen auch in Kenntnis Gegebenheiten vor Ort an der tatsächlichen Prozeß-Meßstelle. Zudem wird die Projektierung dadurch einerseits erheblich vereinfacht, daß tatsächlich erforderliche, insb. auch eher komplexe anwendungspezifischen, Funktionalitäten des Feldmeßgeräts, beispielsweise Meßgerät übergreifend agierende Auswerte- und/oder Steuerfunktionen, komplexe Prozeß- und/oder Eigen-Diagnosefunktionalitäten, adaptive Filter und/oder deren Filterparameter etc., zumindest anteilig erst nach dessen Installation - halbautomatisch im Dialog mit dem inbetriebnehmenden Anwender oder auch vollautomatisch - individuell ermittelt werden können, und zwar auch unter Berücksichtigung von die jeweilige Prozeß-Meßstelle insgesamt spezifizierender Meß- und Betriebsdaten. Anderseits kann somit auch nicht nur eine spezielle, an die konkrete Prozeß-Meßstelle optimal angepaßte Software entsprechend geladen werden, sondern es brauchen zudem auch absehbar nicht erforderliche Software-Produkte nicht bestellt werden. Infolge dessen ist es möglich, das jeweilige Feldmeßgerät mit einer Software zu betreiben, die für den Anwender quasi "maßgeschneiderte" Custom-Funktionalitäten bereitstellt - gegebenenfalls auch zusammen mit einer entsprechend angepaßten "maßgeschneiderten" Geräte-Dokumentation - und somit auch hinsichtlich Umfang und Kosten optimiert ist. Darüberhinaus ist zudem auch möglich, auf Änderungen an der Prozeß-Meßstelle oder in derem näheren Umfeld insoweit rasch zu reagieren, daß zum einen ein allfälliger Re-Konfigurationsbedarf während des Betriebs mittels des Feldmeßgeräts selbst detektierbar ist und entsprechend erforderliche Anpassungen der gespeicherten Software Feldmeßgeräts hinsichtlich Beschaffung und Aktivierung in gleicher Weise vorgenommen werden können, wie seinerzeit bei der eigentlichen Inbetriebnahme, gegebenenfalls auch mittels einer Fernbedienung und -parametrierung. Gleichermaßen kann zu einem späteren Zeitpunkt, beispielsweise im Zuge einer herstellerseitig vorgenommenen Softwareaktualiserung, auf den seinerzeit übermittelten Identifikationsparametersatz zurückgegriffen werden und basierend darauf dem Anwender eine neue, gleichsam maßgeschneiderte Upgrade-Software zur Verfügung gestellt werden, gegebenenfalls auch im direkten Durchgriff auf das Feldmeßgerät via Fernparametrierung.

Die Erfindung und weitere vorteilhafte Ausgestaltung davon werden nun anhand von Ausführungsbeispielen sowie den Figuren der Zeichnung näher erläutert. Funktionsgleiche Teile sind in den einzelnen Figuren, soweit vorhanden, mit denselben Bezugszeichen versehen, die jedoch nur dann wiederholt sind, wenn es sinnvoll erscheint.

Fig. 1 zeigt eine mittels eines Meßgeräts und eines übergeordneten elektronischen Datenverabeitungssystem gebildete Meßanordnung, und

Fig. 2 zeigt nach Art eines Blockschaltbildes eine für die Verwendung in einem Meßgerät gemäß Fig. 1 geeignete Meßgerät-Elektronik.

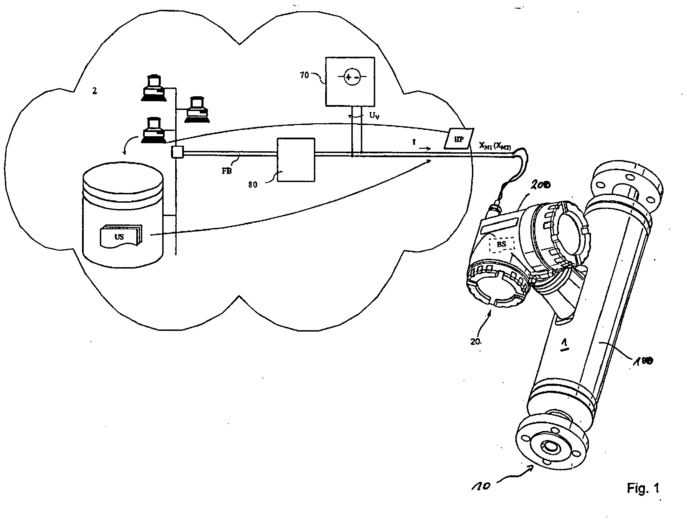

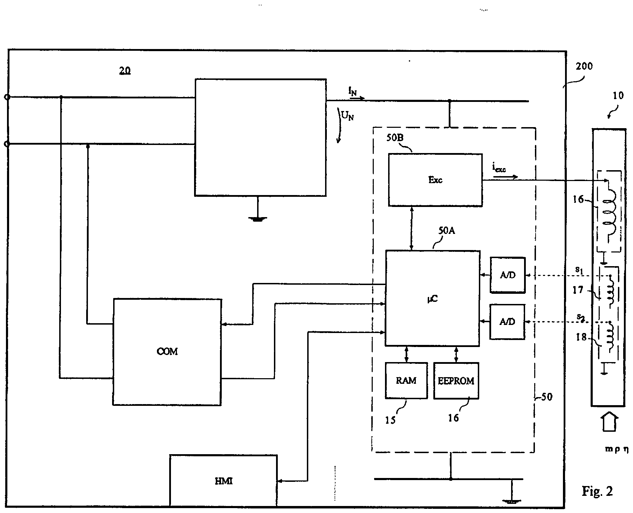

In den Fig. 1 und 2 sind ein Ausführungsbeispiel einer für die Verwendung in der industriellen Meß- und Automatisierungstechnik geeigneten Meßanordnung sowie Einzelheiten davon gezeigt, die dafür vorgesehen ist, chemische und/oder physikalische Meßgrößen eines in einem, insb. als eine Rohrleitung, ein Gerinne, ein Tank, ein Becken oder dergleichen ausgebildeten, - hier nicht gezeigten - Prozeßgefäß geführten, fließ- und/oder schüttfähigen Mediums, insb. eines Schüttguts, einer Flüssigkeit, eines Gases oder dergleichen, zu erfassen und gegebenenfalls computerbasiert weiterzuverarbeiten. Die Meßanordnung weist dafür wenigstens ein programmierbares Feldmeßgerät 1 auf, von dem, wie in Fig. 2 schematisch dargestellt, eine installierte Hardware wenigstens einen primär auf die wenigstens eine zu erfassende chemische und/oder physikalische Meßgröße des zu messenden Mediums, insb. auch Änderungen derselben, reagierenden Meßaufnehmer 10 sowie eine mit diesem im Betrieb kommunizierende, mittels wenigstens eines Mikrocomputers gebildete Meßgerät-Elektronik 20 umfaßt. Der Meßaufnehmer 10 des Meßgeräts ist unter Bildung einer Prozeß-Meßstelle am und/oder in dem - als Prozeßbehälter oder als Prozeßleitung ausgebildeten - Prozeßgefäß installiert und liefert im normalen Meßbetrieb wenigstens ein von der wenigstens einen zu erfassenden Meßgröße beeinflußtes und insoweit mit dieser korrespondierendes Meßsignal s₁, beispielsweise eine veränderliche Signalspannung und/oder einen veränderlichen Signalstrom, unter Verwendung dessen die Meßgerät-Elektronik 20 mittels des Mikrocomputers im normalen Meßbetrieb wiederholt die zu erfassende Meßgröße entsprechend repräsentierenden Meßwerte generiert.

Im besonderen ist das Feldmeßgerät 1 gemäß einer Ausgestaltung der Erfindung dafür vorgesehen, einen Massendurchfluß *m,* eine Dichte r, eine Viskosität h, einen Volumendurchfluß, eine Strömungsgeschwindigkeit, einen Druck *p,* eine Temperatur *J*, einen pH-Wert, einen Pegelstand oder dergleichen, eines in einer Prozeßleitung, beispielsweise einer Rohrleitung, einem Gerinne oder dergleichen, und/oder einem Prozeßbehälter, beispielsweise einemTank, einem Becken oder dergleichen, geführten Mediums, insb. eines Gases, einer Flüssigkeit, eines Pulvers oder eines damit gebildeten Gemisches, zu erfassen und/oder zu überwachen sowie wiederholt diese Meßgröße entsprechend repräsentierende Meßwerte zu liefern.

Gemäß einer weiteren Ausgestaltung der Erfindung ist der Meßaufnehmer so ausgebildet, daß er auf Änderungen einer zu erfassenden Meßgröße X M1 erster Art, beispielsweise einem Massendurchfluß *m* eines in einer Rohrleitung strömenden Mediums, und wenigstens einer dazu diversitären zu erfassenden Meßgröße X_{M2} zweiter Art reagiert, beispielsweise einer Dichte *r* oder einer Viskosität *h* selbigen Mediums. Dementsprechend ist der Meßaufnehmer ferner so ausgebildet, daß das wenigstens eine vom Meßaufnehmer gelieferte Meßsignal s₁ auch die Meßgröße zweiter Art repräsentiert. Alternativ oder in Ergänzung dazu kann der Meßaufnehmer auch so ausgebildet sein, daß er wenigstens ein erstes Meßsignal s₁ und ein zweites Meßsignal s₂ liefert. Damit einhergehend kann die Meßgerät-Elektronik die Meßwerte zumindest teilweise unter Verwendung des ersten und des zweiten Meßsignals s₁, s₂ erzeugen.

Zur meßgerätinternen Weiterverarbeitung des wenigstens einen Meßsignals s₁ ist in der Meßgerät-Elektronik 20, wie bereits erwähnt, ferner ein Microcomputer µC vorgesehen, der mittels wenigstens eines Mikroprozessors und/oder mittels wenigstens eines Signalprozessors gebildet ist. Alternativ oder in Ergänzung können zur Realsierung des Mikrocomputers µC auch anwendungsspezifische integrierten ASIC-Schaltungen und/oder programmierbare logische Bauelemente oder Systeme verwendet werden, wie z.B. sogenannte FPGA (field programmable gate array und/oder, wie u.a. auch in der WO-A 03/098154 vorgeschlagen, sogenannte SOPC (system on programmable chip).

Das vom Meßaufnehmer 10 erzeugte wenigstens eine Meßsignal s₁ ist dem Microcomputer µC unter Zwischenschaltung einer in der Meßgerät-Elektronik 20 vorgesehenen Eingangsstufe zugeführt. Die Eingangsstufe dient dabei im wesentlichen dazu, das wenigstens eine Meßsignal s₁ mittels entsprechender Signalfilterung und Analog-zu-digital-Wandlung zu digitalsieren und somit in wenigstens ein für die Meßgerät interne Weiterverarbeitung geeignet konditioniertes digitales Meßsignal umzuwandeln. Gegebenenfalls kann die Eingangsstufe darüberhinaus auch entsprechende Impedanzwandler und/oder Vorverstärker für das wenigstens eine Meßsignal aufweisen.

Die für den Betrieb des Mikrocomputers µC erforderliche Software ist zumindest anteilig in einer nicht-flüchtigen Datenspeicher-Schaltung 15 der Meßgerät-Elektronik 20, beispielsweise persistent, gespeichert, auf die der Mikrocomputer im Betrieb via internem Bus-System zumindest Daten lesenden und gegebenenfalls auch Daten schreibenden Zugriff hat. Die Datenspeicher-Schaltung 15 kann z.B. mittels eines einzigen EEPROM-Schaltkreises oder mittels mehrerer modularer EEPROM-Schaltkreise realisiert sein. Selbstverständlich können auch andere dem Fachmann bekannte nicht-flüchtige Speicher-Schaltkreise wie z.B. Flash-EEPROM-, EPROM- und/oder CMOS-Schaltkreise für die Datenspeicher-Schaltung 15 verwendet werden. Falls erforderlich kann die Datenspeicher-Schaltung 15 anteilig auch mittels vorab entsprechend fest programmierter permanenter, also nicht lösch- und nicht wiederbeschreibbarer Speicherelemente gebildet sein.

Zur Realisierung von schnellen, insb. echtzeitfähiger, Signalverabeitungs-Routinen umfaßt der Mikrocomputer µC ferner eine als Arbeitsspeicher dienende flüchtige Datenspeicher-Schaltung 16 von geringer Zugriffszeit, in die häufig auszuführende Programm-Codes der Software z.B. aus der Datenspeicher-Schaltung 16 geladen werden können. Die Datenspeicher-Schaltung 16 kann z.B. als periphere, via internes Bus-System an den Mikroprozessor bzw. den Signalprozessor angekoppelte Speicherkomponenente und/oder als direkt in den Mikrocomputer integrierten Cachspeicher ausgebildet sein. Als flüchtige Datenspeicher-Schaltung 16 können z.B. statische und/oder dynamische RAM-Schaltkreise dienen. Falls erforderlich, kann die Datenspeicher-Schaltung 16 ferner dafür verwendet werden, das vom wenisgestens einen Meßsignal abgeleitete digitale Meßsignal abschnitsweise inform einer zumindest mit Abschnitten des Meßsignals korrespondierenden Abtastfolge diskreter Meßdaten zu puffern.

Das Meßgerät 1 weist gemäß einer vorteilhaften Ausgestaltung ferner ein den Meßaufnehmer 10 zumindest teilweise einhausendes Meßaufnehmer-Gehäuse 100 auf. Desweiteren umfaßt das Meßgerät 1 ein, insb. einziges, Elektronik-Gehäuse 200, in dem die mit dem Meßaufnehmer 10 in geeigneter Weise elektrisch verbundene zumindest teilweise, insb. vollständig, Meßgerät-Elektronik 20 untergebracht ist. Besonders für den durchaus üblichen Fall, daß die Meßgerät-Elektronik modular ausgeführt ist, beispielweise mit einem Meßsignale vorverarbeitenden meßaufnehmernahen Modul und mit einem Meßwerte ermittelnden Modul, kann das Elektronik-Gehäuse 200 gleichermaßen modular aufgebaut sein. Gemäß einer weiteren vorteilhaften Ausgetsaltung der Erfindung sind das Meßaufnehmer-Gehäuse 100 mit dem darin befindlichen Meßaufnehmer und das Elektronik-Gehäuse 200 mit der darin befindlichen Meßgerät-Elektronik unter Bildung eines Kompakt-Meßgeräts mechanisch, insb. im wesentlichen starr, miteinander verbunden. Falls erfordelich, kann das Feldmeßgerät des weiteren ein, insb. innerhalb des Elektronik-Gehäuses 200 geeignet untergebrachtes, gleichwohl von außen sichtbares, Anzeigeelement zur Visualiserung der Meßwerte und gegebenenfalls auch weitere Meß- und Betriebsdaten oder auch Alarmzuständen vor Ort aufweisen.

Bei dem im in Fig. 1 und 2 exemplarisch gezeigten Meßgerät handelt es sich im übrigen um ein In-Line-Meßgerät, das im besonderen dazu dient, Meßgrößen, z.B. einen Massedurchfluß, eine Dichte und/oder eine Viskosität, eines in einer - hier nicht dargestellte - Rohrleitung strömenden Mediums, insb. eines Gases und/oder einer Flüssigkeit, zu erfassen und in einen diese Meßgrößen momentan repräsentierenden Meßwerte X_{M1} und/oder X_{M2} abzubilden. Demgemäß kann das Meßgerät beispielsweise ein Coriolis-Massedurchflußmeßgerät, ein Dichte-Meßgerät, oder auch ein Viskositäts-Meßgerät sein. Zum Erzeugen des wenigstens einen Meßsignals umfaßt das gezeigten Meßgerät ferner einen innerhalb des - hier im wesentlichen rohrförmig ausgebildeten - Meßaufnehmer-Gehäuses 100 untergebrachten, in den Verlauf der das Medium führenden Rohrleitung einsetzbaren und im Betrieb vom Medium durchströmten Meßaufnehmer 10 vom Vibrationstyp. Aufbau und Wirkungsweise solcher Meßaufnehmer 10 vom Vibrationstyp sind dem Fachmann ebenfalls geläufig und beispielsweise auch in den eingangs erwähnten WO-A 02/103327, WO-A 02/086426, WO-A 88/02476, WO-A 00/36379, US-B 71 34 348, US-B 70 73 396, US-B 67 69 301, US-B 67 11 958, US-B 66 91 583, US-B 66 66 098, US-A 60 06 609, US-A 57 96 011, US-A 56 87 100, US-A 56 02 345, US-A 53 59 881, US-A 53 01 557, US-A 52 31 884, US-A 47 68, US-A 2006/0179956, US-A 2006/0161359, US-A 2006/0112774, US-A 2006/0096390 oder US-A 2005/0139015 ausführlich beschrieben ist. Es sei jedoch an dieser Stelle darauf hingewiesen, daß, obwohl es sich bei dem im Ausführungsbeispiel exemplarisch vorgestellten Meßgerät um ein In-Line-Meßgerät mit einem Meßaufnehmer vom Vibrationstyp handelt, die Erfindung selbstverständlich auch in In-Line-Meßgeräten mit einem anderen Meßaufnehmertyp umgesetzt werden kann, beispielsweise solchen In-Line-Meßgeräten mit magnetisch-induktivem Meßaufnehmer, mit thermischem Meßaufnehmer, mit akustischem Meßaufnehmer, mit einem Wirbel-Meßaufnehmer etc.. Gleichermaßen kann die vorliegende Erfindung aber beispielsweise auch in andern Meßgerätetypen Verwendung finden, beispielsweise in solchen Meßgeräten, die dem Messen von Meßgrößen dienen, wie sie im Zusammenhang mit Medien vorhaltenden Behältern ermittelt werden, z.B. zum Messen und/oder Überwachen von Pegelständen. Derartige Meßgeräte sind üblicherweise mittels solcher Meßaufnehmer realisiert, die wenigstens eine in ein Lumen des Behälters hineinragende oder zumindest mit dem Lumen kommunizierende Meßsonde, beispielsweise eine Mikrowellenantenne, eine Gouboun-Leitung, einen vibrierenden Tauchkörper oder dergleichen, aufweisen.

In Fig. 2 ist exemplarisch nach Art eines Blockschaltbildes eine Ausgestaltung einer, insb. auch für In-Line-Meßgeräte der vorgenannten Art geeigneten, Meßgerät-Elektronik 20 dargestellt. Rechts In Fig. 2 ist der Meßaufnehmer angedeutet - hier inform eines Meßaufnehmers vom Vibrationstyp mit wenigstens einem Meßrohr, einer darauf einwirkenden, insb. elektrodynamischen, Erregeranordnung 16 zum Vibrierenlassen des Meßrohrs und mit einer, insb. elektrodynamischen, Sensoranordnung 17, 18 zum Erfassen von Vibrationen des wenigstens einen Meßrohrs und zum Erzeugen des wenigstens einen - hier Vibrationen des wenigstens einen Meßrohrs repräsentierenden - Meßsignals s₁. Zum Erzeugen der Meßwerte ist in der Meßgerät-Elektronik eine Betriebs- und Auswerteschaltung 50 vorgesehen, die den Meßaufnehmer über dessen Erregeranordnung 16 entsprechend ansteuert und die das wenigstens eine - hier mittels der Sensoranordnung generierte - Meßsignal s₁ empfängt. Das erste Meßsignal s₁ und das ggf. vorhandene zweite Meßsignal s₂, von denen jedes üblicherweise eine der momentanen Schwingfrequenz des Meßrohrs 13 entsprechende Signalfrequenz aufweist, sind, wie in Fig. 2 gezeigt, einer der Meßgerät-Elektronik 20 vorgesehenen zumindest anteilig mittels des Mikrocomputers µC gebildeten Auswerteeinheit 50A der Betriebs- und Auswerteschaltung 50 zugeführt. Die Auswerteeinheit 50A dient dazu, den die zu erfassende Meßgröße, hier z.B. den Massendurchfluß etc., momentan repräsentierenden Meßwert X_{M1} erster Art, insb. numerisch, zu ermitteln und in das entsprechend korrespondierende, ausgangs der der Betriebs- und Auswerteschaltung 50 abgreifbare Meßwertsignal x_{M1} umzuwandeln. Darüberhinaus dient die Auswerteeinheit 50A gemäß einer Ausgestaltung der Erfindung auch dazu, zusätzlich zum Meßwerte X_{M1} erster Art wenigstens einen Meßwert X_{M2} zweiter Art, insb. numerisch, zu ermitteln, der eine weitere zu erfassende Meßgröße, hier z.B. die Dichte und/oder die Viskosität des Mediums, momentan repräsentiert. Gleichermaßen dient die die Auswerteeinheit 50A ferner dazu, auch den Meßwert X_{M2} zweiter Art in ein entsprechend korrespondierendes, ausgangs der der Betriebs- und Auswerteschaltung 50 abgreifbares Meßwertsignal x_{M2} umzuwandeln. Während beim hier gezeigten Meßaufnehmer die Dichte oder auch Viskosität durchaus anhand eines einzigen der Meßsignale s₁, s ₂ bestimmbar sind, werden für den Fall, daß der Massedurchfluß gemessen werden soll, in der dem Fachmann bekannten Weise beide Meßsignale s₁, s₂ verwendet, um so, beispielsweise im Signal-Zeitbereich oder im Signal-Frequenzbreich, eine mit dem Massendurchfluß korrespondierende Phasendifferenz zu ermitteln.

Nach einer weiteren Ausgestaltung der Erfindung ist die Auswerteeinheit 50A unter Verwendung des in der Meßgerät-Elektronik 20 vorgesehenen Mikrocomputers µC realisiert, der in entsprechender Weise so programmiert ist, daß er wiederkehrend den Meßwert X_{M1} erster Art und gegebenenfalls auch den Meßwert X_{M2} zweiter Art anhand der- hier von den Schwingungssensoren 17, 18 - gelieferten Meßsignale digital ermittelt. Wie in der Fig. 2 ferner dargestellt ist jedes der Meßsignale s₁, s₂ über jeweils einen A/D-Wandler dem Mikroprozessor inform eines entsprechenden korrespondierenden Digitalsignals zugeführt. Alternativ oder in Ergänzung dazu können von den beiden Meßsignalen, wie im besonderen bei Coriolis-Massedurchflußaufnehmern üblich, vor der Digitaliserung eine analoge Signaldifferenz und/oder -summe gebildet werden.

Die seitens der Auswerteeinheit 50A erzeugten und/oder empfangenen Meß- oder Betriebsdaten können, wie bereits angedeutet, ferner in entsprechenden digitalen Datenspeichern RAM, EEPROM flüchtig und/oder persistent abgespeichert werden.

Bei dem hier gezeigten Meßaufnehmer handelt es sich insoweit um einen aktiven Meßaufnehmer, als dieser im Betrieb zum Zwecke der Meßsignalgenerierung von - hier als hinsichtlich einer Erregerstromstärke geregelten - Treibersignal i_{exc} gespeist ist. Daher weist die Meßgerät-Elektronik 20 nach einer Weiterbildung der Erfindung ferner eine der Speisung der Erregeranordnung 16 mit dem erwähnten Erregersignal i exc dienende Treibereinheit 50B, die in dem in der Fig. 2 gezeigten Ausführungsbeispiel zusammen mit dem betriebsgemäß vibrierenden Meßrohr 13 praktisch einen elektro-mechanischen Regelkreis darstellt. Dieser Regelkreis ist zumindest für den Fall, daß es sich bei dem Meßaufnehmer um einen Coriolis-Masse/Dichte-Meßaufnehmer handelt, in vorteilhafter Weise so ausgelegt, daß er sich elektrisch sowohl auf eine mechanische Resonanzfrequenz der erwünschtermaßen angeregten Vibrationen des Meßrohrs 13 als auch auf die mittels des Referenzsignals Sr vorgegebene Amplitude dieser Vibrationen einstellt. Die Treibereinheit 50B kann dabei z.B. in der üblichen Weise mittels einer phasenverriegelte Schleife, einer so genannte PLL, zur elektrischen Regelung von Resonanzfrequenz und Phasenlage des Treibersignals und mittels einer entsprechenden Amplitudenregelstufe für die elektrischen Regelung der Amplitude des Treibersignals und insoweit auch der Vibrationsamplitude gebildet sein.

Wie in Fig. 2 dargestellt steht die Treibereinheit 50B auch in Kontakt mit der Auswerteeinheit 50A von der die Treibereinheit 50B z.B. die erforderlichen Betriebsdaten, wie z.B. die momentan einzustellende Erregerfrequenz und/oder die eine für den Erregerstrom momentan einzustellende Amplitude und ggf. einzustellende Phase, empfängt oder an den die Treibereinheit 50B intern erzeugte Einstellsignale und/oder -parameter, insb. auch Informationen über den tatsächlich eingestellten Erregerstrom i_{exc} und/oder die in den Meßaufnehmer eingespeiste Erregerleistung P_{exc} sendet. Die Betriebsdaten für die Treibereinheit 50B - hier beispielsweise eine Erregerfrequenz f_{exc}, eine Signalamplitude und/oder eine Phasenlage des Treibersignals i_{exc} relativ zum Meßsignal s₁ - können dabei sowohl absolute Vorgaben als auch relative Vorgaben sein. Alternativ oder in Ergänzung dazu können die an die Treibereinheit 50B übergebenen Betriebsdaten auch inkrementelle bzw. dekrementelle Änderungen von Erregerfrequenz, Amplitude und/oder Phase repräsentieren. Zusätzlich zum Mikroprozessor µC kann die Betriebs- und Auswerteschaltung 50 im weiteren beispielsweise auch einen dem Erzeugen des Treibersignals dienenden Signalgenerator, beispielsweise einen digitalen Signalprozessor oder ein entsprechend als Signalgenerator konfiguriertes programmierbares logisches Bauelement aufweisen.

Neben dem wenigstens einen Meßgerät 1 umfaßt die Meßanordnung, wie in Fig. 1 schematisiert angedeutet, desweiteren ein diesem übergeordenetes elektronisches Datenverarbeitungssystem 2, zu dem zumindest im normalen Meßbetrieb seitens des Meßgerät wiederkeherend ermittelte Meßwert- gegebenenfalls auch inform eines digital codierten Telegramms - möglichst zeitnah und/oder in Echtzeit hin transferiert werden. Zum Erfassen von vom Meßgerät übermittelten Meßwerten ist Datenverarbeitungssystem 2 ferner wenigstens eine zumindest zeitweise mit dem Feldmeßgerät geeignet kommunizierende Auswerte-Schaltung 80 vorgesehen. Das übergeordnete Datenverarbeitungssystem 1 kann beispielsweise Teil einer prozeßnahen automatisierten Steuerung oder auch eines weitreichenden Prozeßleitsystems sein, das eine Vielzahl von Prozeßleitrechnern und/oder digitalen Speicherprogrammierbaren Steuerungen aufweist, die innerhalb einer industriellen Anlage räumlich verteilt angeordnet und über ein entsprechendes, insb. auch mittels digitaler Feldbusse gebildetes, Datenübertragungsnetzwerk miteinander gekoppelt sind. Gleichermaßen kann das Datenverarbeitungssystem mit weiteren Meßgeräten und/oder mit in den Prozeß eingreifenden Stellgeräten, wie z.B. Ventilen oder Pumpen, verbunden sein. Gemäß einer Weiterbildung der Erfindung umfaßt das Datenverarbeitungssystem weiters wenigstens einen dem Übertragen digitaler Meß- und/oder Betriebsdaten dienenden, insb. seriellen, Feldbus FB. Bei dem wenigstens einen Feldbus FB kann es sich beispielsweise um einen solchen gemäß einem der in der industriellen Prozeßautomation etablierten Standards, wie z.B. FOUNDATION FIELDBUS, PROFIBUS, CANBUS, MODBUS, RACKBUS-RS 485 oder dergleichen, handeln. In einer vorteilhaften Weiterbildung ist dabei ferner vorgesehen, daß die vorgenannte Auswerte-Schaltung 80, insb. zur Weiterleitung der vom Feldmeßgerät inform digitaler Meßdaten empfangenen Meßwerte, an den wenigstens einen Feldbus gekoppelt ist. Je nach Ausführung von Feldbus und Meßgerät kann letzters entweder direkt oder mittels eines Adapters, der das Meßwert tragende Signal passend konvertiert, an das Datenverabeitungssystem angeschlossen sein.

Das Feldmeßgerät 1 und das von diesem gegebenenfalls räumlich beträchtlich entfernte Datenverarbeitungssystem 2 sind gemäß einer Weiterbildung der Erfindung mittels wenigstens eines im Betrieb zumindest zeitweise von einem, insb. veränderlichen, Strom I durchflossen Leitungspaares 2L miteinander elektrisch verbunden. Der Strom kann beispielsweise von einer im übergeordneten Datenverarbeitungssystem vorgesehenen externen elektrischen Energieversorgung 70 eingespeist sein, die im Betrieb wenigstens eine den im Leitungspaar 2L fließenden Strom I treibende, insb. uni-polare, Versorgungsspannung Uᵥ bereit stellt. Als Energiequelle kann dabei z. B. eine Batterie und/oder eine über ein anlageninternes Versorgungsnetz gespeiste Gleich- oder Wechselspannungsquellenschaltung dienen. Zum, insb. wieder lösbaren, Anschließen des wenigstens einen Leitungspaares 2L an die Meßgerät-Elektronik 20 und insoweit das Feldmeßgerät 1 als solches weist dieses weiters wenigstens ein nach außen geführtes Klemmenpaar auf. Die Meßanordnung ist gemäß einer weiteren Ausgestaltung ferner so ausgebildet, daß das Meßgerät die intern generierten Meßwerte - seien es nun Meßwerte von einer einzigen erfaßten Meßgrößen oder Meßwerte von diversen erfaßten Meßgrößen, wie z.B. einem Massendurchfluß und einer Dichte eines in einer Rohrleitung strömenden Mediums - zumindest teilweise über das wenigstens eine Leitungspaar 2L an das übergeordnete Datenverarbeitungssystem 2 übermittelt. Das Paar elektrischer Leitungen 2L kann dabei beispielsweise als Teil einer sogenannten, in der industriellen Meßtechnik äußerts bewährten Zweileiter-Stromschleife ausgebildet sein. Für diesen Fall würden dann einerseits die zumindest zeitweise erzeugten Meßwerte über dieses einzige Leitungspaar 2L an das übergeordnete Datenverarbeitungssystem inform eines lastmdoulierten, insb. getakteten oder kontinuierlich veränderlichen, Schleifenstromes gesendet werden und andererseits die Meßgerät-Elektronik und insoweit das Meßgerät zumindest zeitweise und/oder zumindest anteilig über das Leitungspaar 2L mit elektrischer Energie versorgt werden.

Die Meßgerät-Elektronik 20 ist gemäß einer weiteren Ausgestaltung der Erfindung ferner dafür ausgelegt, im Betrieb eine Vielzahl von zumindest anteilig die wenigstens eine Meßgröße repräsentierenden, insb. digitalen, Meßwerten zu generieren, und diese zumindest teilweise via Klemmen- und daran enstprechend angeschlossenes Leitungspaar 2L an das angeschlossene Datenverarbeitungssystem 2 auf dieses abgestimmt zu übermitteln. Falls erforderlich, kann die erfindungsgemäße Meßanordnung ferner dahingehend weitergebildet sein, daß Meßgerät 1 und Datenverarbeitungssystem 2 auch mittels wenigstens eines zusätzlichen - hier nicht gezeigten - zweiten Leitungspaares miteinander verbunden sind, das im Betrieb zumindest zeitweise entsprechend von einem Strom durchflossen ist. Für diesen Fall kann das Meßgerät ferner die intern generierten Meßwerte zumindest teilweise auch über das zusätzliche Leitungspaar an das Datenverarbeitungssystem übermitteln. Alternativ oder in Ergänzung dazu können Meßgerät und Datenverarbeitungssystem auch drahtlos, beispielsweise mittels Funkwellen, miteinander kommunizieren. Besonders für letzteren Fall, kann es auch von Vorteil sein, das Feldmeßgerät, insb. auch ausschließlich, mittels einer internen und/oder externe, insb. austauschbaren und/oder wiederaufladbaren, Batterie und/oder Brennstoffzelle mit elektrischer Energie zu versorgen. Darüberhinaus kann das Felmeßgerät zudem auch oder ausschließlich mittels regenerative Energiequellen nutzenden, unmittelbar am Feldmeßgerät und/oder von diesem entfernt plazierten, Leistungskonvertern gespeist sein, wie. z.B. Thermogeneratoren, Solarzellen, Windgeneratoren oder dergleichen.

Nach einer weiteren Ausgestaltung der Erfindung ist vorgesehen, daß das Meßgerät zumindest zeitweise mit einer externen Bedien- und Kontroll-Einheit, beispielsweise einem Handbediengerät oder einer im übergordeneten Datenverarbeitungssystem vorgesehenen Programmiergerät, gerätespezifische Daten, wie z.B. Meßgerät interne Einstell-Parameter für die Megerät-Elektronik und/oder Meßgerät interne Diagnose-Parameter, austauschen kann. Dafür ist in der Meßgerät-Elektronik 20 ferner wenigstens eine Kommunikationsschaltung COM vorgesehen, die die Kommunikation über wenigstens eines der Leitungspaare - hier das erste Leitungspaar 2L - entsprechend kontrolliert und steuert. Im besonderen dient die Kommunikationsschaltung dazu die zu senden gerätespezifische Daten in Signale umzuwandeln, die über das entsprechend Paar elektrische Leitungen übertragbar sind, und diese dann darin einzukoppeln. Alternativ oder in Ergänzung dazu kann die Kommunikationsschaltung COM aber auch dafür ausgelegt sein, von extern über das jeweilig Paar elektrische Leitungen gesendete gerätespezifische Daten, beispielsweise einen Satz von zu änderenden Einstell-Parameter für die Megerät-Elektronik, entsprechend zu empfangen. Als Kommunikationsschaltung COM kann, z. B. eine gemäß dem HART@-Feld-Kommunikations-Protokoll (HART Communication Foundation, Austin TX) arbeitende Schnittstellenschaltung dienen, die also höher frequente, FSK-codierte (frequency shift keying) Wechselspannungen als Signalträger verwendet, oder aber auch gemäß dem PROFIBUS-Standard ausgelegte Schnittstellenschaltung. Falls erforderlich, können ferner auch extern, beispielsweise in einer Laufzeitumgebung des übergeordneten Datenverarbeitungssystems, ablaufende, mit der Meßgerät-Elektronik 20 kommunizierenden Daten ver- und/oder bearbeitende Prozesse auf die Meßgerät-Elektronik direkten Zugriff haben, insb. auch in Daten schreibender und/oder Daten lesender Weise auf die Meßgerät-Elektronik vorgesehene Datenspeicher-Schaltung 15.

Zum Bilden der Prozeß-Meßstelle ist das Feldmeßgerät zunächst vor Ort entsprechend zu plazieren, insb. fest zu montieren, und in Betrieb zu nehmen. Dafür wird das Feldmeßgerät zunächst mittels des Meßaufnehmers an und/oder in dem dem Führen und/oder Vorhalten des zu messenden Mediums dienenden Prozeßgefäß, beispielsweise also einer Rohrleitung, einem Gerinne, einem Tank, einem Becken oder dergleichen, installiert, beispielsweise mittels entsprechender Flansche und/oder Einbaustutzen. Nach einer Weiterbildung wird das Feldmeßgerät zum Bilden der fertigen Prozeß-Meßstelle ferner an das übergeordnete elektronische Datenverarbeitungssystem angebunden, und zwar in der Weise, daß Daten zwischen Feldmeßgerät und Datenverarbeitungssystem, insb. leitungsgebunden und/oder drahtlos per Funk, zumindest im normalen Meßbetrieb wiederkehrend kommunizierbar sind. Dabei kann eine entsprechende Komunikationsverbindung zwischen dem Feldmeßgerät und dem Datenverarbeitungssystem bereits unmittelbar vor oder nach dem Montieren des Meßaufnehmers aufgebaut werden. Wie bereits erwähnt, kann die Kommunikationsverbindung dabei zumindest abschnittsweise mittels einer digitalen, insb. als das Feldmeßgerät auch speisenden Zweidraht-Leitung ausgebildeten, Datenleitung und/oder zumindest abschnittsweise mittels einer Funkverbindung gebildet sein.

Infolge der Verwendung eines programmierbaren Mikrocomputers µC mit entsprechender mittels geeigneter, insb. nicht-flchtiger, Halbleitersspeicher für Daten- und/oder Programme gebildeten Speicherperepherie kann das Feldmeßgerät, wie u.a. auch in den eingangs erwähnten US-B 71 24 239 oder US-B 68 54 055 vorgeschlagen, auch nach der Installation vor Ort, insb. während oder auch nach seiner Inbetriebnahme, durch Umprogrammieren einzelner Softwarebestandteile und/oder auch durch Austausch kompletter Software-Pakte rekonfiguriert werden.

Erfindungsgemäß ist vorgesehen, das Feldmeßgerät, nachdem es vor Ort am betriebsgemäß Medium führenden Prozeßgefäß installiert und gegebenenfalls mittels elektrischer Leitungen an das übergeordnete Datenverarbeitungsssystem physisch angeschlossen worden ist - sei es zum Zwecke des Datenaustausches und/oder zum Zwecke der Energieversorgung -, den Mikrocomputer zunächst aufzustarten, um daraufhin eine, insb. zumindest anteilig hardwarenahe, Basis-Software zu aktivieren, so daß die, beispielsweise als Firmware ausgebildete, Basis-Software BS mittels des Mikrocomputers µC ausführbar ist. Die Basis-Software BS ist dafür in einem innerhalb der Speicherschaltung und insoweit auch innerhalb des Feldmeßgeräts vorgesehenen, insb. nicht-flüchtigen, ersten Speicher vorgehalten und stellt Grundfunktionalitäten des Feldmeßgeräts zumindest anteilig bereit, die nach dem Aufstarten im Zusammenspiel von Basis-Software und im Feldmeßgerät installierter Hardware schließlich verfügbar sind. Zum Aktivieren bzw. ausführen der Basis-Software werden zumindest davon aktuell tatsächlich benötigte Bestandteile entsprechend in den flüchtigen Arbeitsspeicher geladen.

Grundfunktionalitäten können z.B. Steuerprogramme zur Erzeugung von Treibersignalen sein, die zumindest innerhalb einer dem jeweiligen Meßaufnehmer zugehörigen Meßaufnehmer-Baureihe universell verwendbar und weitgehend vereinheitlicht sind und die zumindest das Aufstarten auch des Meßaufnehmers und somit auch das Erzeugen zumindest vorläufiger Meßsignale ermöglichen. Desweiteren können die Grundfunktionalitäten robuste und insoweit universelle, beispielsweise auch die Filterordnung zu Lasten von Filterschärfe und/oder-dynamik auf ein Mindestmaß reduzierende, Einstellungsparameter für die das Meßsignal vorverarbeitende Eingangsstufe sowie entsprechend universelle Signalverarbeitungsprogramme für das wenigstens mittels der Eingangstufe generierte Digitalsignal und zur Ermittlung gegebenenfalls auch noch ungenauen vorläufigen Meßwerten sein. Alternativ oder in Ergänzung dazu umfassen die Grundfunktionalitäten des Feldmeßgeräts nach einer weiteren Ausgestaltung der Erfindung Berechnungsroutinen zur Spektralanalyse zumindest des wenigstens einen Meßsignals. Die Spektralanalyse kann hierbei beispielsweise basierend auf einer diskreten Fourier-Transformation des entsprechend digitaliserten Meßsignals und/oder einer diskreten Autokorrelation desselben erfolgen. Ferner können Grundfunktionalitäten auch solche Diagnosefunktionen umfassen, die, insb. auch basierend auf dem wenigstens einen Meßsignal, eine Funktionstüchtigkeit des Feldmeßgeräts wiederkehrend überprüfen. Schließlich können die mittels der Basis-Software BS bereitgestellten Grundfunktionalitäten auch hardwarenahe das Aufstarten des Mikrocomputers µC selbst ermöglichende Softwarkomponenten, sogenannte Bootstrap-Loader, umfassen und/oder solche Softwarkomponenten mittels denen die Kommunkationsverbindung mit dem übergeordneten Datenverabeitungssystem hergestellt bzw. genutzt werden kann. Dabei ist im besonderen vorgesehen, daß die mittels der Basis-Software realisierte schließlich realsierte Kommunkationsverbindung so ausgebildet ist, daß allfällig gleichermaßen mittels der aktivierten Basis-Software erzeugte Meßwerte nicht als gültige Meßwerte an das Datenverabeitungssystem weitergeleitet werden, beispielsweise also überhapt nicht oder nur als aktuell ungültig gekennzeichnet ausgegeben werden.

Alternativ oder in Ergänzung zu einer Realsierung als ladbare, gegebenenfalls auch editierbare Programmcodes für den Mikroprozessor kann ein Teil der Grundfunktionalitäten des Feldmeßgeräts falls erforderlich darüber hinaus auch mittels festprogrammierter Programmspeicher und/oder mittels entsprechender fest verdrahteter digitaler Schaltungskomponenten, z.B. inform von anwendungsspezifische integrierten ASIC-Schaltungen, als permanent in der Meßgerät-Elektronik 20 verfügbar realisert sein. Demgemäß ist nach einer weiteren Ausgestaltung der Erfindung der die Basis-Software haltende erste Speicher zumindest anteilg als Teil der nicht-flüchtigen Datenspeicher-Schaltung 15 mittels nicht-flüchtiger - also permanenter und/oder persistenter - Speicherelemente gebildet.

Erfindungsgemäß ist ferner vorgesehen, nach dem Aufstarten des Mikrocomputers - gegebenenfalls gefolgt von einer ersten Überprüfung der Funktionstüchtigkeit des Meßgeräts - unter Verwendung von nunmehr darin ausgeführter Basis-Software wenigstens einen im Feldmeßgerät zumindest temporär vorgehaltenen, die Prozeß-Meßstelle zumindest näherungsweise identifizierenden initialen Identifikationsparametersatz iIP zum extern des Feldmeßgeräts gebildeten übergeordneten elektronischen Datenverarbeitungssystem zu transferieren.

Der Identifikationsparametersatz ilP ist im besonderen so ausgebildet und bemessen, daß damit zumindest anteilig eine momentane Einbausituation des Feldmeßgeräts und/oder ein im Prozeßgefäß befindliches Medium entsprechend repräsentiert wird, zumindest insoweit als dadurch die letztlich angestrebte Meßgenauigkeit des Feldmeßgerät beeinflußt wird. Für die Meßgenauigkeit des installierten Feldmeßgeräts von Bedeutung sind dabei u.a. dessen Einbaulage und dessen Nähe zu einem Störer, wie etwa einem Ventil, einer Pumpe, einem Rührer oder dergleichen, als die Einsituation näher identifizierende, insb auch bemaßt spezifizierende, Parameter. Weitere die Einbausituation näher spezifizierende Parameter seien exemplarisch für Meßgeräte der in Rede stehenden Art die genaue Nennweite, Wandstärke und/oder Materialeigenschaften der im Bereich der Prozeß-Meßstelle bereits vorgefundenen Behälter oder Rohrleitungen oder auch die genauen Abmaße und Ausrichtungen allfällig für die Installation des Meßgeräs benutzte, vorgefertigte Einbauöffnungen oder Anschlußstutzen. Darüberhinaus kann für eine Vielzahl von, insb. in Rohrleitungen verwendeten, Feldmeßgeräten u.a. auch der Strömungstyp des im Prozeßgefäß befindlichen Mediums, insb. hinsichtlich Turbulenz, Stabilität des Strömungsprofils, Phasenverteilung, und/oder die Zusammensetzung des Mediums, insb. hinsichtlich der Konzentration allfällig mitgeführter Fremdstoffen, als das Medium und insoweit die Applikation näher identifizierende, insb. auch bemaßt spezifizierende, Parameter von besonderem Interesse sein.

Der Identifikationsparametersatz ilP kann sowohl durch einen einzigen Komplexparameter, der vor Ort mittels des Mikrocomputers µC ermittelt worden ist, z.B. basierend auf einer anhand von tatsächlich gemessenen und/oder abgefragten Einzelparametern durchgeführten Differenzialdiagnose, und/oder auch mittels mehrerer Einzelparameter gebildet sein, die die Prozeßmeßstelle erst in einer im übergeordneten Datenverarbeitungssystem, insb. auch mit von anderen Feldgeräten gelieferten Meßwerten und/oder Betriebsdaten oder auch mit anderen im Datenverarbeitungssystem gehalten Anwenderdaten, durchgeführten Zusammenschau bzw. Differenzialdiagnose final spezifizieren. Dabei können zur Ermittlung des Identifikationsparametersatz ilP mittels des Meßgeräts und/oder innerhalb des übergeordneten Datenverarbeitungssystems implementiert binär-logische und/oder fuzzy-basierte Regelwerke, Neuronale Netzwerke oder auch auf multi-variater Statistik, beispielsweise einer Kovarianzanalyse, beruhende Klassifikatoren für Meßwerte und/oder Betriebsdaten eingesetzt werden. Beispiele für solche der Identifizierung von Prozeß-Meßstellen dienlichen, teilweise auch sehr komplexen Diagnosefunktionalitäten sind u.a. auch in den eingangs erwähnten US-B 70 40 181, US-B 65 05 519 oder US-B 66 34 238 vorgeschlagen.

In Anbetracht der Vielzahl von Möglichkeiten an speziellen Einbaumöglichkeiten für solche Meßgeräte wie auch der Vielzahl an unterschiedlichen Medien kann es ferner von Vorteil sein, zum Ermitteln des Identifikationsparametersatzes ein entsprechendes Datenbanksystem - sei es im übergeordneten Datenverarbeitungssystem und/oder in einem zum Inbetriebnehmen des Meßgeräts vor Ort verwendeten exterenen Programmiergerät - vorzusehen, in dem einerseits verschiedene Einbaumöglichkeiten und/oder Medien klassifiziert und anderseits die damit korrespondierenden Identifikationsparametersätze bzw. Einzel- und/oder Komplexparameter entsprechend zuordenbar abgelegt sind. Des weiteren kann es von Vorteil sein, den aktuell ermittelten Identifikationsparametersatz am Meßgerät vor Ort geeignet zu Visualiseren, beispielsweise mittels des allfällich vorhanden Anzeigelements und/oder mittels eines gegebenenfalls an das Meßgerät angeschlossenen externen Programmiergeräts.

Gemäß einer weiteren Ausgestaltung der Erfindung ist ferner vorgesehen, den initialen Identifikationsparametersatz ilP in der Meßgerät-Elektronik zumindest temporär nicht-flüchtig, insb. persistent in einem wiederbeschreibbaren Halbleiterspeicher, abzuspeichern. Alternativ oder in Ergänzung dazu ist gemäß einer anderen Ausgestaltung der Erfindung ist ferner vorgesehen den wenigstens einen initialen Identifikationsparametersatz unter Verwendung von im Mikrocomputer ausgeführter Basis-Software zur Laufzeit zu ermitteln. Im besonderen wird der wenigstens eine initiale Identifikationsparametersatz ilP hierbei auch unter Verwendung des wenigstens einen Meßsignals s₁ ermittelt. Dementsprechend umfassen die im Zusammenspiel von Hardware und Basis-Software BS bereitgestellten Grundfunktionalitäten zumindest für diesen Fall auch solche Funktionen mittels denen das Meßsignal s₁ erzeugt, verarbeitet und entsprechend ausgewertet werden kann. Zudem ist nach einer weiteren Ausgestaltung der Erfindung vorgesehen, wenigstens einen die wenigstens eine Meßgröße momentan repräsentierenden digitalen Meßwert basierend auf dem wenigstens einen Meßsignal s₁ und im Mikrocomputer µC ausgeführter Basis-Software zu ermitteln.

Gemäß einer anderen Ausgestaltung der Erfindung ist des weiteren vorgesehen den initialen Identifikationsparametersatzes auch unter Verwendung des digitalen Meßsignals, insb. auch unter Verwendung der erwähnten im internen Speicher des Feldmeßgeräts zumindest flüchtig gepufferten diskreten Signalfolge zu generieren. Im besondern weisen die Grundfunktionalitäten des Feldmeßgeräts dafür Berechnungsroutinen zum Vergleichen von diskreten Signalfolgen mit vorab für verschiedene Applikationen, insb. für verschiedene Einbausituationen und/oder für verschiedene Medien, ermittelte diskreten Signalfolgen und daraus abgeleitet entsprechend klassifizierten Signal-Prototypen auf. Zu dem ist nach einer weiteren Ausgestaltung der Erfindung vorgesehen, zum Generieren des wenigstens einen Identifikationsparametersatzes einen oder mehrere solcher solcher vorab ermittelten und in der Meßgerät-Elektronik nicht-flüchtig gespeicherten Signal-Prototypen mit mit Abschnitten des Meßsignals korrespondierenden, gegebenfalls auch flüchtig und/oder nicht-flüchtig gespeicherte, diskrete Signalfolgen zu vergleichen. Alternativ oder in Ergänzung zu einer Verwendung von solchen mit Abschnitten des Meßsignals korrespondierenden diskreten Signalfolgen und dementsprechenden Signal-Prototypen können, für den oben beschriebnenen-Fall, daß die Grundfunktionalitäten des Feldmeßgeräts auch Berechnungsroutinen zur Spektralanalyse des wenigstens einen Meßsignals umfassen, beispielsweise auch mittels einer solchen Spektralanalyse aktuell gewonnene diskrete Signalfolgen mit entsprechend korrespondierenden Signal-Prototypen zur Generierung des wenigstens einen Identifikationsparametersatzes verwendet werden. Hierbei können z.B. ein aktuell ermitteltes diskretes Amplitudenspektrum eines Abschnitts des wenigstens einen Meßsignals s₁ mit damit entsprechend korrespondierenden Prototypen von diskreten Amplitudenspektren verglichen werden, die für gegebene Einbausituationen und/oder gegeben Medien vorab entsprechend ermittelt worden sind. Desweiteren können auch bei einer bestimmten, als Referenz dienenden Signalfrequenz ermittelte spektrale Amplitudenwerte mit dafür entsprechend vorgesehenen, vorab festgelegten Referenzwerten gleicher Frequenz und/oder bei einer bestimmten, als Referenz dienenden Signalamplitude ermittelte spektrale Signalfrequenzen mit dafür entsprechend vorgesehenen, vorab festgelegten Referenzwerten gleicher Amplitude verglichen werden.

Alternativ oder in Ergänzung zur Ermittlung des initialen Identifikationsparametersatz ilP mittels des wenigstens einen Meßsignals s₁ ist nach einer weiteren Ausgestaltung der Erfindung vorgesehen diesen unter Berücksichtigung wenigstens eines von einem Anwender vorgegebenen Applikationsparameters ermittelt. Der Applikationsparameter kann beispielsweise so ausgebildet sein, daß damit die Applikation hinsichtlich dafür einschlägig vorgegebener, gegebenenfalls auch spezifisch standardisierter Berechungsroutinen für die Ermittlung der Meßwerte wie auch deren Einheiten, Diagnose- und Überwachungsroutinen sowie entsprechende Alarmgebungsverfahren ausreichend spezifiziert ist. Der Applikationsparameter kann beispielsweise während der Inbetriebnahme seitens des Anwenders mittels einer, insb. unmittelbar im Feldmeßgerät vorgesehenen, Mensch-Maschine-Schnittstelle HMI vor Ort und/oder aus dem übergeordneten Datenverarbeitungssystem heraus eingeben ermittelt werden. Darüberhinaus können die Grundfunktionalitäten soweit ausgebildet sein, daß der Applikationsparameter beispielsweise seitens des Anwenders auch im Dialog mit dem bereits aufgestarteten Feldmeßgerät passend bestimmt werden kann.

Nach einer Weiterbildung der Erfindung wird die erwähnte Kommunikationsverbindung zwischen dem Feldmeßgerät und dem Datenverarbeitungssystem vor dem Transferiren des wenigstens einen initialen Identifikationsparametersatzes ilP hergestellt, insb. auch unter Verwendung von im Mikrocomputer µC ausgeführter Basis-Software BS, um dann zum Übertragen deselben hin zum übergeordeneten Datenverarbeitungssystems benützt zu werden.

Das Transferieren des wenigstens einen initialen Identifikationsparametersatzes zum Datenverarbeitungssystem kann im weiteren durch Auslösen eines entsprechenden Start-Befehls erfolgen. Dieser kann beispielsweise vor Ort oder auch gegebenenfalls von innerhalb des Datenverarbeitungssystems, beispielsweise von der Leitwarte aus, manuell eingeben werden. Das Eingeben und insoweit auch das Erzeugen des Start-Befehls kann dabei unter Verwendung der bereits erwähnten, mit dem Feldmeßgerät kommunizierenden, beispielsweise von außen an dieses elektrisch angeschlossenen und/oder darin vorgesehenen, Mensch-Maschine-Schnittstelle erfolgen. Desweitern kann zum manuellen Erzeugen des Start-Befehls auch unter Verwendung einer Auswahlfunktion seitens der Meßgerät-Elektronik bereitgestellten Auswahlfunktion erfolgen, die es dem Anwender ermöglicht, im Dialog mit dem Feldmeßgerät aus mehren möglichen, gegebenenfalls auch bereits aktivierten Kommunikationsverbindungen jene auszuwählen, über die der Identifikationsparametersatz zum Datenverarbeitungssystem hin transferiert werden soll. Alternativ zum manuellen Auslösen des Start-Befehls kann das Transferieren des wenigstens einen initialen Identifikationsparametersatzes zum Datenverarbeitungssystem aber beispielsweise auch durch die Meßgerät-Elektronik nach erfolgreicher Ermittlung des Identifikationsparametersatzes selbsttätig ausgelöst werden.

Für den Fall, daß die Kommunkitationsverbindung zum Transferieren genutzt wird und diese bereits weitere Feldmeßgräte gleichermaßen mit dem Datenverarbeitungsystem verbindet, ist davon auszugehen, daß die Übertragung nicht notwendigerweise zeitnah erfolgt und direkt, sondern insoweit eher mittelbar erfolgen wird. Allerdings kann die Kommunkitationsverbindung aber durchaus auch so ausgebildet sein, daß mittels des Start-Befehls das Transferieren des wenigstens einen initialen Identifikationsparametersatzes zum Hostrechner eher zeitnah, gegebenenfalls auch in Echtzeit ausgelöst wird.

Erfindungsgemäß ist im weiteren vorgesehen, daß unter Verwendung des wenigstens einen transferierten initialen Identifikationsparametersatzes iIP aus einem Ensemble von Software-Produkten wenigstens eine auf die Prozeß-Meßstelle entsprechend zugeschnitte, in einem, insb. nicht-flüchtigen, zweiten Speicher vorgehaltenen Upgrade-Software US selektiert wird, die über die momentan im vor Ort installierten Feldmeßgerät verfügbaren Grundfunktionalitäten hinausgehende Custom-Funktionalitäten für das Feldmeßgerät bereitstellt.

Die Custom-Funktionalitäten können beispielsweise die Meßsignalverarbeitung und -auswertung wie auch die Meßwertgenerierung und/oder -präsentation betreffende, insoweit eher branchen- oder anwenderspezifisch angepaßte Funktionen umfassen. Alternativ oder in Ergänzung dazu können die angepaßten Custom-Funktionalitäten auch sensor- oder feldmeßgerätespezifische Funktionen betreffen, wie beispielsweise Treibersoftwarekomponenten für die Betriebs- und Auswerteschaltung, insb. betreffend die Aufbereitung des rohen Meßsignals und/oder die Erzeugung speziell angepaßter Treibersignale.

Dementsprechend ist nach einer weiteren Ausgestaltung der Erfindung die Upgrade-Software US in der Weise ausgebildet, daß sie zumindest einen Datensatz von zu ändernden Einstellparametern für das Feldmeßgerät bereitstellt. Die mittels Upgrade-Software US gelieferten Einstellparameter können beispielsweise für die das wenigstens eine Meßsignal s₁ konditionierende Signaleingangsstufe und/oder andere Komponenten der installierten Hardware bestimmt sein. Alternativ oder in Ergänzung dazu können die mittels Upgrade-Software US gelieferten Einstellparameter aber auch für einen mittels des Mikrocomputers ausgeführten, den wenigstens einen Meßwert numerisch berechnende Auswertalgorithmus und/oder für eine wenigstens ein Treibersignal für den Sensor liefernden Signalausgangstufe vorgesehen sein. Im besonderen kann es sich bei einem solchen Auswertalgorithmus auch um einen digitalen, insb. auch adaptive, Filter repräsentierenden Rechenalgorithmus handeln. Die zu ändernden Einstellparameter können im weiteren zumindest anteilig mittels vorab am nämlichen Feldmeßgerät und/oder z.B. auch an einem typgleichen Feldmeßgerät durchgeführter Kalibriermessungen generiert worden sind. Ferner kann die Upgrade-Software zudem auch eine über jene den Grundfunktionalitäten innewohnende, zur Ermittlung des wenigstens einen initialen Identifikationsparametersatzes bereits genutzte Diagnosefunktion hinausgehende erweiterte Diagnosefunktion bereitstellen.

Nach einer weiteren Ausgestaltung der Erfindung ist die Upgrade-Software US als hardwarenahe Software, sogenannte Firmware, ausgebildet. Dementsprechend kann es sich bei den Software-Produkten beispielsweise um herstellerseitig fest vorkonfektionierten, nachträglich nicht mehr oder nicht ohne spezielle Autoriserung veränderbaren Programmcode handeln. Alternativ oder in Ergänzung können die Software-Produkte aber auch als herstellerseitig zwar vorkonfektionierte, jedoch nachträglich zumindest anteilig, beispielsweise auch seitens des Anwenders und/oder innerhalb der Laufzeitumgebung des Datenverarbeitungssystems, anwenderspezifisch konfektionierbare Software-Produkte ausgelegt sein.

In Anbetracht dessen, daß der die Prozeß-Meßstelle näher spezifizierende Identifikationsparametersatz ilP letztlich auch die jeweils benötigte Upgrade-Software eineindeutig identifiziert, kann der Identifikationsparametersatz iIP im übrigen auch direkt inform eines entsprechenden Bestellcodes für die Upgrade-Software US ermittelt werden.

Der die zu selektierende Upgrade-Software US, insb. persistent, vorhaltende zweite Speicher kann z.B. extern des Feldmeßgeräts, von außen, z.B. inform eines USB-Sticks, an die Meßgerät-Elektronik 20 angedockt werden. Er kann aber auch vom Feldmeßgerät entfernt angeordnet sein, insb. intern des Datenverarbeitungssystem in einem darin vorgesehenen Hostrechner oder auch in einem herstellerseitig installlierten, beispielsweise als INTRANET organisierten, gleichwohl von außerhalb zugänglichen Datennetzwerk. Der vorgenannte Hostrechner kann beispielsweise in einer Leitwarte oder aber auch in einem entfernten Rechenzentrum des Anwenders plaziert sein. Wie bereits angedeutet kann als die Upgrade-Software US vorhaltender zweiter Speicher beispielsweise ein elektrisch wiederbeschreibbarer, insb. von außen via USB-Schnittstelle oder über eine andere geeigneter Serviceschnittstelle an die Meßgerät-Elektronik 20 anschließbarer, Halbleiterspeicher dienen. Alternativ oder in Ergänzung dazu kann der zweite Speicher aber auch mittels einer Festplatte, einer CD-ROM, einer Diskette, einer DVD, einem Magnetband oder einem anderen Massenspeicher sowie mit dem Meßgerät entsprechenden kommunizierende Lesegeräten für den jeweiligen Massespeicher gebildet ist.

Die basierend auf dem wenigstens einen Idenfikationspaarmeter ilP selektierte, der Prozeß-Meßstelle, insb. der Einbausituation des Feldmeßgeräts und/oder dem Prozeßgefäß befindlichen Medium, entsprechend angepaßte Upgrade-Software US wird schließlich in einen innerhalb des Feldmeßgeräts dafür vorgesehenen, z.B. nicht-flüchtigen, dritten Speicher transferiert. Falls erforderlich kann die Upgrade-Software US aber durchaus auch, insb. ausschließlich, flüchtig in der Meßgerät-Elektronik vorgehalten werden. Dementsprechend kann also der dritte Speicher mittels Komponenten der nicht-flüchtigen Datenspeicher-Schaltung 15 und/oder mittels Komponenten der flüchtigen Datenspeicher-Schaltung 16 gebildet sein. Im übrigen können zum Transferieren der Upgrade-Software zum Feldmeßgerät dem Fachmann durchaus geläufige Übertragungsverfahren angewendete werden, beispielsweise entsprechend den in den eingangs erwähnten US-B 68 54 055, US-A 2004/0015952, WO-A 01/14968, WO-A 00/77585, WO-A 00/77583 oder WO-A 00/48157 oder auch in den US-A 54 67 286, US-A 58 12 857, US-A 59 37 198, US-B 60 55 632 oder US-B 60 55 633 vorgeschlagenen Konfigurier- oder Re-Konfigurierverfahren für Feldgeräte.

Für den Fall, daß zum einen die Upgrade-Software US via Datenverarbeitungssystem zum Feldmeßgerät hin transferiert werden soll und zum anderen die Kommunikationsverbindung zwischen Feldmeßgerät und übergeordnetem Datenverarbeitunsgsystem bereits hergestellt ist, ist gemäß einer weiteren Ausgestaltung der Erfindung ferner vorgesehen, die Upgrade-Software US, insb. azyklisch, via Kommunikationsverbindung zum Feldmeßgerät zu übertragen. Dabei kann die Upgrade-Software US beispielsweise im Zuge eines vom Meßgerät aus gesteuerten Herunterladens oder aber auch im Zuge eines vom Datenverarbeitungssystem aus gesteuerten Hochladens zum Meßgerät übertragen werden.

Nachdem die, insb. zumindest anteilig hardwarenahe, Upgrade-Software US in den dritten Speicher transferiert und gegebenefalls seitens des Anwenders und/oder des Hersteller entsprechend freigegeben worden ist, wird die nunmehr- persistent und/oder permanent oder gegebenfalls flüchtig gespeichert - im Felmeßgerät verfügbare Upgrade-Software US in der Weise aktiviert, daß zumindest die transferierte Upgrade-Software mittels des Mikrocomputers ausführbar ist. Infolge dessen sind im Zusammenspiel von Upgrade-Software und im Feldmeßgerät installierter Hardware nunmehr - ausschließlich oder zusätzlich - Custom-Funktionalitäten des Feldmeßgeräts vor Ort verfügbar. Im gleichen Maße wie zuvor beim Aktivieren der Basis-Software bedeutet auch hierbei das Aktivieren der Upgrade-Software, daß zumindest die zur Realisierung aktuell tatsächlich benötigter Custom-Funktionalitäten entsprechend erforderlichen Komponenten der Upgrade-Software in den flüchtigen Arbeitsspeicher geladen werden. Das Aktivieren der Upgrade-Software kann dabei beispielsweise inform eines Warmstarts, also ohne zwischenzeitliches Ausschalten des Mikrocomputers µC, oder aber auch im Zuge eines Kaltstarts, also durch Aus- und Wiedereinschalten des gesamten Meßgeräts, durchgeführt werden.

Nachdem die Upgrade-Software entsprechend aktiviert ist, ist gemäß einer weiteren Ausgestaltung der Erfindung vorgesehen, wenigstens einen die wenigstens eine Meßgröße momentan repräsentieren digitalen Meßwerts basierend auf dem wenigstens einen Meßsignal sowie der nunmehr im Mikrocomputer µC ausgeführter Upgrade-Software. Der mittels Upgrade-Software US und dem wenigstens einen Meßsignal s₁ generierte wenigstens eine digitale Meßwert ist vorzugsweise so ausgebildet, daß er zu allfällig mittels der Basis-Software und dem wenigstens einen Meßsignal s₁ vorab generierten digitalen Meßwerten X_{M1}, X_{M2} insoweit typgleich ist, als er dieselbe Meßgröße, insb. auch mit gleicher Maßeinheit, repräsentiert.

Wie bereits erwähnt, können die mittels der Upgrade-Software US bereitgestellten Custom-Funktionalitäten durchaus auch erweiterte Diagnosefunktionen aufweisen. Diese können in vorteilhafter Weise derart ausgebildet sein, daß damit im weiteren Betrieb des Meßgeräts der initial Identifikationsparametersatz ilP validiert und/oder die Prozeß-Meßstelle wiederkehrend auf für die eigentliche Messung erhebliche Veränderungen überprüft wird. Im weiteren ist dabei vorgesehen, nach dem aktivieren der Upgrade-Software wenigstens einen verfeinerten Identifikationsparametersatz zu ermitteln, der die im Zusammenspiel von Feldmeßgerät und Prozeßgefäß gebildete Prozeß-Meßstelle, insb. wiederum auch die momentane Einbausituation des Feldmeßgeräts und/oder das im Prozeßgefäß befindliche Medium, momentan repräsentiert, unter Verwendung von im Mikrocomputer ausgeführter Upgrade-Software und/oder Basis-Software. Dies im besonderen mit dem Ziel, die Prozeß-Meßstelle möglichst noch genauer als durch den initialen Identifikationsparametersatz zu spezifizieren. Der verfeinerte Identifikationsparametersatzes kann dann wiederum zum übergeordneten Datenverarbeitungssystem unter Verwendung von im Mikrocomputer ausgeführter Upgrade-Software und/oder Basis-Software transferiert werden. Im übrigen kann der verfeinerte Identifikationsparametersatz nach dem gleichen Schema wie der initiale Identifikationsparametersatz ermittelt und/oder zum übergeordneten Datenverarbeitungssystem transferiert werden. Dementsprechend kann der verfeinerte Identifikationsparametersatz beispielsweise auch unter Verwendung des wenigstens einen Meßsignals ermittelt werden. Zudem ist es aber auch möglich zur Ermittlung des verfeinerten Identifikationsparametersatzes auch den zuvor generierten initialen Identifikationsparametersatzes zu berücksichtigen. Im weiteren kann auch das Transferieren des verfeinerten Identifikationsparametersatzes zum einen manuell seitens des Anwenders via Mensch-Maschine-Schnittstelle oder auch automatisch durch Meßgerät gestartet und zum anderen auch über eine der vorgenannten Kommunikationspfade durchgeführt werden.

Mittels des schließlich innerhalb des Datenverarbeitungssystems vorliegenden verfeinerten Identifikationsparametersatzes kann somit wiederum bei Bedarf aus jener Vielzahl von im Datenverarbeitungssystem gespeicherten Software-Produkten eine passendere, beispielsweise auch hardwarenahe, Upgrade-Software selektiert und zum Meßgerät transferiert werden, die eine über die Grundfunktionalitäten des Feldmeßgeräts hinausgehende sowie aktuell im Feldmeßgerät verfügbare Custom-Funktionalitäten ergänzende oder ersetzende Custom-Funktionalitäten für das Feldmeßgerät bereitstellt. Das Transferieren und Speichern dieser passenderen Upgrade-Software kann beispielsweise durch Aufladen in das im normalen Meßbetrieb befindliche Meßgerät erfolgen oder aber auch dadurch, daß zumindest zum Speichern sowie zum nachräglichen Aktivieren der neuen Upgrade-Software das Meßgerät in einen entsprechenden Konfiguriermodus mit deaktivierter Meßfunktion versetzt wird. Zum Speichern der transferierten neuen Upgrade-Software kann der innerhalb des Feldmeßgeräts vorgesehene, aktuell die vorherige Upgrade-Softwar vorhaltende dritte Speicher und/oder ein innerhalb des Feldmeßgeräts zusätzlich vorgesehener, insb. nicht-flüchtiger, vierter Speicher dienen.

Desweiteren kann durch Vergleichen des wenigstens einen, gegebenenfalls auch wiederkehrend ermittelten, verfeinerten Identifikationsparametersatzes mit einem vorgegebenen, die Hardware des Feldmeßgeräts und/oder die im Feldmeßgerät momentan ausführbare Software repräsentierenden Geräteparameters verifiziert werden, inwieweit die aktuelle Upgrade-Software den aktuellen, allfällig im Laufe der Betriebszeit des Meßgeräts veränderten Gegebenheiten an der Prozeß-Meßstelle noch genügt oder nicht und insoweit beispielsweise ein akutes Risiko erhöhter Meßungenauigkeit besteht. Demgemäß ist nach einer weiteren Ausgestaltung der Erfindung ferner vorgesehen, zum Zwecke des Verifizieren der Eignung des installierten Feldmeßgeräts zum Erfüllen der gestellten Meßaufgabe zumindest zeitweise eine mittels der Meßgerät-Elektronik Meldung zu generieren, die signalisert, ob der Identifikationsparametersatz und der Geräteparameter übereinstimmen und/oder zumindest zeitweise eine Meldung zu generieren, die signalisert, ob der Identifikationsparametersatz und der Geräteparameter voneinander abweichen. Bei dem Geräteparameter kann es sich beispielsweise um eine im Meßgerät gespeicherte Gerätekennzahl oder eine gespeicherte Versionsnummer der aktuellen Upgrade-Software handeln.

Nach einer vorteilhaften Weiterbildung der Erfindung ist ferner vorgesehen, den wenigstens einen mittels des Feldmeßgeräts erzeugten und zum elektronischen Datenverarbeitungssystem transferierten Identifikationsparametersatzes ilP daselbst nicht-flüchtig abzuspeichern. Basierend auf dem im Datenverarbeitungssystem gespeicherten Identifikationsparametersatz ilP kann somit jene Meldung, wonach die wenigstens eine weitere Upgrade-Software zum Ensemble Software-Produkten hinzugefügt worden ist, zeitnah und selektiv gerade dann abgesetzt werden, wenn die hinzugefügte Upgrade-Software zu der durch den gespeicherten Identifikationsparametersatze ilP identifizierten Prozeß-Meßstelle tatsächlich oder zumindest sehr wahrscheinlich paßt. Demgemäß ist nach einer weiteren Ausgestaltung der Erfindung ferner vorgesehen nachdem wenigstens eine weitere Upgrade-Software zum Ensemble von Software-Produkten hinzugefügt worden ist, den wenigstens einen im Datenverarbeitungssystem gespeicherten Identifikationsparametersatzes zum Generieren einer, insb. direkt an das Feldmeßgerät adressierten, Meldung zu verwenden, die das Hinzufügen der wenigstens einen weiteren Upgrade-Software zum Ensemble entsprechend signalisert. Die Meldung kann vor Ort beispielsweise angezeigt und/oder derart weiterverabeitet werden, daß die neue Upgrade-Software entsprechend geordert und gleichermaßen wie zuvor die aktuell im Felmeßgerät aktivierte Upgrade-Software zur Meßgerät-Elektronik hin transferiert wird. Ein weiterer Vorteil eines solchen Abspeicherns von im Lauf des Betriebes des Meßgeräts zeitlich aufeinanderfolgend ermittelten Idenfikationsparametern ist ferner darin zusehen, daß daraus allfällige signifikante Änderung des Regimes, mit dem der Prozeß im Bereich der Prozeß-Meßstelle gefahren, und/oder eine signifikante Änderung der Eigenschaften des zu messenden Medium stattfinden erkannt werden können und falls erforderlich mit entsprechenden Software-Updates und/oder Medlungen entsprechend betreut werden können.

## Patentansprüche

1. Verfahren zum Inbetriebnehmen und/oder Rekonfigurieren eines programmierbaren Feldmeßgeräts von dem eine installierte Hardware wenigstens einen im Betrieb auf eine chemische und/oder physikalische Meßgröße eines schütt- und/oder fließfähigen Mediums, insb. einem Schüttgut, einer Flüssigkeit, einem Gas oder dergleichen, reagierenden Meßaufnehmer sowie einen im Betrieb mit diesem kommunizierenden Mikrocomputers aufweist, welches Verfahren folgende Schritte umfaßt:
- Installieren des Feldmeßgeräts mittels des Meßaufnehmers an und/oder in einem dem Führen und/oder Vorhalten von schütt- und/oder fließfähigen Medien, insb. Schüttgütern, Flüssigkeiten, Gasen oder dergleichen, dienenden, insb. als eine Rohrleitung, ein Gerinne, ein Tank, ein Becken oder dergleichen ausgebildeten, Prozeßgefäß zum Bilden einer Prozeß-Meßstelle;
- Aufstarten des Mikrocomputers und Aktivieren einer, insb. zumindest anteilig hardwarenahen, in einem innerhalb des Feldmeßgeräts vorgesehenen, insb. nicht-flüchtigen, ersten Speicher vorgehaltenen, Grundfunktionalitäten des Feldmeßgeräts zumindest anteilig bereitstellenden Basis-Software in der Weise, daß die Basis-Software mittels des Mikrocomputers ausführbar ist, so daß im Zusammenspiel von Basis-Software und im Feldmeßgerät installierter Hardware die Grundfunktionalitäten des Feldmeßgeräts verfügbar sind;
- Transferieren wenigstens eines die Prozeß-Meßstelle, insb. auch eine momentane Einbausituation des Feldmeßgeräts und/oder ein im Prozeßgefäß befindliches Medium, zumindest näherungsweise identifizieren, insb. auch spezifizierenden, im Feldmeßgerät zumindest temporär vorgehaltenen, insb. unter Verwendung von im Mikrocomputer ausgeführter Basis-Software ermittelten, initialen Identifikationsparametersatz zu einem extern des Feldmeßgeräts, insb. von diesem entfernten und/oder räumlich verteilten, übergeordneten elektronischen Datenverarbeitungssystem unter Verwendung von im Mikrocomputer ausgeführter Basis-Software;
- Selektieren wenigstens einer in einem, insb. extern des Feldmeßgeräts von diesem entfernt und/oder intern des Datenverarbeitungssystem angeordneten, zweiten Speicher vorgehaltenen Upgrade-Software, die über die Grundfunktionalitäten hinausgehende, insb. feldmeßgerät- und/oder anwenderspezifische, Custom-Funktionalitäten für das Feldmeßgerät bereitstellt, aus einem Ensemble von, insb. fest vorkonfektionierten oder konfektionierbaren, Software-Produkten unter Verwendung des wenigstens einen initialen, insb. bereits als Bestellcode für Software ausgebildeten, Identifikationsparametersatzes;
- Transferieren von der Prozeß-Meßstelle, insb. der Einbausituation des Feldmeßgeräts und/oder dem Prozeßgefäß befindlichen Medium, angepaßter selektierter Upgrade-Software in einen innerhalb des Feldmeßgeräts vorgesehenen, insb. nicht-flüchtigen, dritten Speicher; sowie
- Aktivieren von, insb. persistent und/oder permanent gespeicherter, Upgrade-Software in der Weise, daß zumindest die, insb. zumindest anteilig hardwarenahe, transferierte Upgrade-Software mittels des Mikrocomputers ausführbar ist, so daß im Zusammenspiel von Upgrade-Software und im Feldmeßgerät installierter Hardware Custom-Funktionalitäten des Feldmeßgeräts verfügbar sind.

2. Verfahren nach einem der vorherigen Ansprüche, weiters umfassend einen Schritt des Ermittelns wenigstens eines verfeinerten Identifikationsparametersatzes, der die im Zusammenspiel von Feldmeßgerät und Prozeßgefäß gebildete Prozeß-Meßstelle, insb. auch eine momentane Einbausituation des Feldmeßgeräts und/oder ein im Prozeßgefäß befindliches Medium, momentan, insb. genauer als der initiale Identifikationsparametersatz, repräsentiert, unter Verwendung von im Mikrocomputer ausgeführter Upgrade-Software und/oder Basis-Software.

3. Verfahren nach dem vorherigen Anspruch, weiters umfassend einen Schritt des Transferierens des wenigstens einen verfeinerten Identifikationsparametersatzes zum übergeordneten Datenverarbeitungssystem unter Verwendung von im Mikrocomputer ausgeführter Upgrade-Software und/oder Basis-Software.

4. Verfahren nach dem vorherigen Anspruch, weiters umfassend einen Schritt des Selektierens wenigstens einer Upgrade-Software, die eine über die Grundfunktionalitäten des Feldmeßgeräts hinausgehende sowie aktuell im Feldmeßgerät verfügbare Custom-Funktionalitäten ergänzende oder ersetzende Custom-Funktionalitäten für das Feldmeßgerät bereitstellt, aus einer Vielzahl von im Datenverarbeitungssystem gespeicherten Software-Produkten unter Verwendung des wenigstens einen transferierten verfeinerten Identifikationsparametersatzes.

5. Verfahren nach dem vorherigen Anspruch, weiters umfassend einen Schritt des Transferierens der selektierten, insb. hardwarenahen, Upgrade-Software in den innerhalb des Feldmeßgeräts vorgesehenen dritten Speicher und/oder in einen innerhalb des Feldmeßgeräts vorgesehenen, insb. nicht-flüchtigen, vierten Speicher.

6. Verfahren nach einem der Ansprüche 2 bis 5, weiters umfassend einen Schritt des Vergleichens des wenigstens einen verfeinerten Identifikationsparametersatzes mit einem vorgegebenen, die Hardware des Feldmeßgeräts und/oder die im Feldmeßgerät momentan ausführbare Software, insb. inform einer Gerätekennzahl oder einer Versionsnummer, repräsentierenden Geräteparameters, insb. zum Generieren einer Meldung, die signalisiert, ob der Identifikationsparametersatz und der Geräteparameter übereinstimmen; und/oder zum Generieren einer Meldung, die signalisiert, ob der Identifikationsparametersatz und der Geräteparameter voneinander abweichen.

7. Verfahren nach einem der vorherigen Ansprüche, weiters umfassend einen Schritt des Erzeugen wenigstens eines Meßsignals mittels des Meßaufnehmers.

8. Verfahren nach Anspruch 2 und 7, wobei der verfeinerte Identifikationsparametersatz auch unter Verwendung des wenigstens einen Meßsignals und/oder des initialen Identifikationsparametersatzes ermittelt wird.

9. Verfahren nach einem der Ansprüche 7 bis 8,
- wobei die Grundfunktionalitäten des Feldmeßgeräts Berechnungsroutinen zur Spektralanalyse zumindest des Meßsignals umfassen, insb. basierend auf einer diskreten Fourier-Transformation des Meßsignals und/oder einer diskreten Autokorrelation des Meßsignals; und/oder
- wobei die Grundfunktionalitäten des Feldmeßgeräts Berechnungsroutinen zur Spektralanalyse zumindest des Meßsignals aufweisen, und wobei der Schritt des Erzeugens des Identifikationsparametersatzes Schritte des Ermittelns eines diskreten Amplitudenspektrums umfaßt, insb. derart, daß der der Schritt des Erzeugens des Identifikationsparametersatzes weiters einen Schritt des Verwendens wenigstens eines, insb. an einer vorgegebenen Signalfrequenz und/oder an einer vorgegebenen Signalamplitude ausgewählten, spektralen Amplitudenwerts des Meßsignals umfaßt.

10. Verfahren nach einem der Ansprüche 7 bis 9, weiters umfassend:
-- einen Schritt des Digitalisierens des wenigstens einen Meßsignals zum Erzeugen eines mit dem wenigstens einen Meßsignal korrespondierenden, insb. auch dem Erzeugen des initialen Identifikationsparametersatzes dienenden, digitalen Meßsignals; sowie
- einen Schritt des Erzeugens wenigstens einer, insb. in einem internen Speicher des Feldmeßgeräts vorgehaltenen, mit Abschnitten des Meßsignals korrespondierenden, insb. auch dem Erzeugen des initialen Identifikationsparametersatzes dienenden, diskreten Signalfolge,
- wobei die Grundfunktionalitäten des Feldmeßgeräts Berechnungsroutinen zum Vergleichen von mit Abschnitten des Meßsignals korrespondierenden diskreten Signalfolgen mit vorab für verschiedene Applikationen, insb. für verschiedene Einbausituationen und/oder für verschiedene Medien, ermittelte und entsprechend klassifizierte Signal-Prototypen umfassen, und wobei der der Schritt des Erzeugens des Identifikationsparametersatzes weiters Schritte des Vergleichens diskreten Signalfolgen mit einem oder mehreren Signal-Prototypen umfaßt.

11. Verfahren nach einem der vorherigen Ansprüche, weiters umfassend:
- einen Schritt des Anbindens des Feldmeßgeräts an das übergeordnete elektronische Datenverarbeitungssystem in der Weise, daß Daten zwischen Feldmeßgerät und Datenverarbeitungssystem, insb. leitungsgebunden und/oder drahtlos per Funk, kommunizierbar sind; und/oder
- einen Schritt des Herstellens einer Kommunikationsverbindung zwischen dem Feldmeßgerät und dem Datenverarbeitungssystem zum, insb. leitungsgebundenen und/oder drahtlosen, Übertragen des wenigstens einen initialen Identifikationsparametersatzes und/oder der Upgrade-Software; und/oder
- einen Schritt des Eingebens eines Start-Befehls, der den Schritt des Transferierens des wenigstens einen initialen Identifikationsparametersatzes zum Datenverarbeitungssystem, insb. zu einem darin vorgesehenen Hostrechner, zumindest mittelbar, insb. zeitnah, auslöst; und/oder einen Schritt des Abspeicherns wenigstens eines mittels des Feldmeßgeräts erzeugten, die Prozeß-Meßstelle zumindest näherungsweise identifizieren Identifikationsparametersatzes innerhalb des übergeordneten elektronischen Datenverarbeitungssystems; und/oder
- einen Schritt des Hinzufügens wenigstens einer weiteren Upgrade-Software zum Ensemble von Software-Produkten und einen Schritt des Verwendens des wenigstens einen im Datenverarbeitungssystem gespeicherten Identifikationsparametersatzes zum Generieren einer, insb. direkt an das Feldmeßgerät adressierten, Meldung, die das Hinzufügen der wenigstens einen weiteren Upgrade-Software zum Ensemble signalisiert, insb. derart, daß die Meldung zumindest dann generiert wird, wenn die hinzugefügte Upgrade-Software zu der Prozeß-Meßstelle paßt.

12. Verfahren nach einem der vorherigen Ansprüche, weiters umfassend einen Schritt des Ermittelns des initiale Identifikationsparametersatzes unter Verwendung von im Mikrocomputer ausgeführter Basis-Software, insb. auch unter Verwendung des wenigstens einen Meßsignals und/oder Berücksichtigung eines von einem Anwender im Dialog mit dem Feldmeßgerät mittels einer, insb. unmittelbar im Feldmeßgerät vorgesehenen, Mensch-Maschine-Schnittstelle vorgegebenen Applikationsparameters.

13. Verfahren nach dem vorherigen Anspruch, wobei der initiale Identifikationsparametersatz in der Weise ermittelt wird, daß er zumindest anteilig eine momentane Einbausituation des installierten Feldmeßgeräts, insb. dessen Einbaulage, dessen Nähe zu einem Störer, wie einem Ventil, einer Pumpe, einem Rührer oder dergleichen, und/oder ein im Prozeßgefäß befindliches Medium, insb. dessen Strömungstyp, dessen Zusammensetzung oder dergleichen, momentan repräsentiert.

14. Verfahren nach einem der vorherigen Ansprüche, wobei der, insb. mittels wenigstens eines Mikroprozessors und/oder mittels eines Signalprozessors gebildete, Mikrocomputer wenigstens einen flüchtigen, insb. als Arbeitsspeicher für einen im Mikrocomputer vorgesehenen Mikroprozessor und/oder für einen im Mikrocomputer vorgesehenen Signalprozessor dienenden, Speicher aufweist.

15. Verfahren nach einem der Ansprüche 7 bis 9, weiters umfassend einen Schritt des Digitalisierens des wenigstens einen Meßsignals zum Erzeugen eines mit dem wenigstens einen Meßsignal korrespondierenden, insb. auch dem Erzeugen des initialen Identifikationsparametersatzes dienenden, digitalen Meßsignals.

16. Verfahren nach einem der Ansprüche 7 bis 15, weiters umfassend:
einen Schritt des Ermittelns wenigstens eines digitalen Meßwerts, der die wenigstens eine Meßgröße momentan repräsentiert, basierend auf dem wenigstens einen Meßsignal und im Mikrocomputer ausgeführter Upgrade- Software; und/oder
- einen Schritt des Ermittelns wenigstens eines digitalen Meßwerts, der die wenigstens eine Meßgröße momentan repräsentiert, basierend auf dem wenigstens einen Meßsignal und im Mikrocomputer ausgeführter Basis- Software; und/oder
- einen Schritt des Herstellens einer Kommunikationsverbindung zwischen dem Feldmeßgerät und dem übergeordneten elektronischen Datenverarbeitungssystem zum, insb. leitungsgebundenen und/oder drahtlosen, Übertragen wenigstens eines basierend auf dem wenigstens einen Meßsignal ermittelten, die wenigstens eine Meßgröße momentan repräsentierenden digitalen Meßwerts.

17. Verfahren nach einem der vorherigen Ansprüche,
- wobei die Upgrade-Software Einstellungsparameter für installierte Hardware und/oder, insb. adaptive, digitale Filter repräsentierende Rechenalgorithmen bereitstellt; und/oder
- wobei die Upgrade-Software eine, insb. über eine den Grundfunktionalitäten innewohnende, der Ermittlung zumindest des wenigstens einen initialen Identifikationsparametersatzes Diagnosefunktion hinausgehende, erweiterte Diagnosefunktion bereitstellt; und/oder
- wobei die Upgrade-Software zumindest einen Datensatz zu ändernder, insb. zumindest anteilig mittels vorab am nämlichen Feldmeßgerät und/oder an einem typgleichen Feldmeßgerät durchgeführter Kalibriermessungen generierten, Einstellparameter für das Feldmeßgerät, insb. für eine wenigstens ein mittels des Meßaufnehmers erzeugtes Meßsignal konditionierende Signaleingangsstufe und/oder für einen mittels des Mikrocomputers ausgeführten, den wenigstens einen Meßwert numerisch berechnende Auswertalgorithmus und/oder für eine wenigstens ein Treibersignal für den Meßaufnehmer liefernden Signalausgangstufe, liefert; und/oder
- wobei der im Feldmeßgerät vorgesehene erste Speicher für Basis-Software als nicht-flüchtiger, insb. persistenter, Speicher ausgebildet ist; und/oder
- wobei der die Upgrade-Software vorhaltende zweite Speicher in einem im Datenverarbeitungssystem vorgesehenen, insb. in einer Leitwarte plazierten, Hostrechner installiert ist, und/oder
- wobei der die Upgrade-Software vorhaltende, insb. nicht-flüchtige, zweite Speicher extern des Feldmeßgeräts, insb. von diesem entfernt und/oder intern des Datenverarbeitungssystem, angeordnet ist; und/oder
- wobei der die Upgrade-Software vorhaltende zweite Speicher mittels einer Festplatte, einer CD-ROM, einer Diskette, einer DVD, einem Magnetband oder einem anderen Massenspeicher gebildet ist; und/oder
- wobei der im Feldmeßgerät vorgesehene dritte Speicher für Custom-Software als flüchtiger Speicher ausgebildet ist.

## Claims

1. Method to commission and/or reconfigure a programmable field measuring device whose installed hardware has at least a sensor, which reacts during operation to a chemical and/or physical measured variable of a pourable and/or free-flowing medium, particularly a bulk solid, a liquid, a gas or similar, and which has a microcomputer that communicates with the sensor during operation, said method comprising the following steps:
- Installation of the field measuring device on and/or in a process vessel using the sensor to form a process measuring point, said vessel serving to transport and/or hold pourable and/or free-flowing media - particularly bulk solids, liquids, gases or similar - and said vessel designed particularly as a pipe, a channel, a tank, a basin or similar;
- Starting of the microcomputer and activation of a basic software in such a way that the basic software can be executed using the microcomputer so that the basic functions of the field measuring device are available with the interaction of the basic software and the hardware installed in the field measuring device, wherein in particular the basic software is at least partially low-level, is contained in a first, particularly non-volatile, memory, which is provided in the field measuring device, and, at least in part, makes basic functions of the field device available;
- Transfer of at least one initial identification parameter set to a higher-order electronic data processing system using basic software executed in the microcomputer, said system being located outside the field measuring device, particularly at a distance from it and/or geographically distributed, wherein said identification parameter set at least approximately identifies, and particularly also specifies, the processing measuring point, particularly also a current installation situation of the field measuring device and/or a medium in the process vessel, is retained at least temporarily in the field measuring device and is determined using basic software executed in the microcomputer.
- Selection of at least one upgrade software, which is contained in a second memory that is, in particular, arranged externally at a distance from the field device and/or internally within the data processing system, said upgrade software particularly providing field measuring device-specific or user-specific customized functions for the field measuring device that go beyond the scope of the basic functions, wherein the upgrade software is selected particularly from a collection of already assembled or assemblable software products using the one initial identification parameter set, at least, which is already designed as an order code for software;
- Transfer of the selected upgrade software, which is adapted to the process measuring point, particularly the installation situation of the field measuring device and/or the medium located in the process vessel, to a third, particularly non-volatile, memory provided within the field measuring device; and
- Activation of upgrade software, particularly upgrade software which is persistently and/or permanently stored, in such a way that at least the transferred upgrade software, which is at least partially low level, can be executed using the microcomputer, such that custom functions of the field device are available as a result of the interaction between the upgrade software and the hardware installed in the field measuring device.

2. Method as claimed in one of the previous claims, further comprising a step to determine at least one refined identification parameter set which represents the process measuring point formed with the interaction of the field measuring device and the process vessel, particularly also a snapshot installation situation of the field measuring device and/or a medium in the process vessel, such representation being instantaneous and, in particular, more accurate than the initial identification parameter set, using the upgrade software and/or basic software executed in the microcomputer.

3. Method as claimed in the previous claim, further comprising a step to transfer the one refined identification parameter set, at least, to the higher-order data processing system using the upgrade software and/or basic software executed in the microcomputer.

4. Method as claimed in the previous claim, further comprising a step to select at least an upgrade software which provides custom functions for the field measuring device - said functions extending beyond the scope of the basic functions of the field measuring device and complementing or replacing the custom functions currently available in the field measuring device - from a wide range of software products saved in the data processing system using the one refined identification parameter set, at least, which has been transferred.

5. Method as claimed in the previous claim, further comprising a step to transfer the selected, particularly low-level, upgrade software to the third memory provided in the field measuring device and/or to the fourth, particularly non-volatile, memory provided in the field measuring device.

6. Method as claimed in one of the Claims 2 to 5, further comprising a step to compare the one refined identification parameter set, at least, with a predefined device parameter which represents the hardware of the field measuring device and/or the software currently executable in the field measuring device, particularly in the form of a device reference number or a version number, specifically to generate a message that signals whether the identification parameter set and the device parameter match; and/or to generate a message that signals whether the identification parameter set and the device parameter deviate from one another.

7. Method as claimed in one of the previous claims, further comprising a step to generate at least one measuring signal using the sensor.

8. Method as claimed in Claim 2 and 7, wherein the refined identification parameter set is also determined using the one measuring signal at least and/or the initial identification parameter set.

9. Method as claimed in one of the Claims 7 to 8
- wherein the basic functions of the field measuring device comprise computation routines for the spectral analysis of at least the measuring signal, particularly based on a discrete Fourier transformation of the measuring signal and/or a discrete autocorrelation of the measuring signal; and/or
- wherein the basic functions of the field measuring device have computation routines for the spectral analysis of at least the measuring signal and wherein the step to generate the identification parameter set comprises steps to determine a discrete amplitude spectrum, particularly such that the step to generate the identification parameter set further comprises a step to use at least a spectral amplitude value of the measuring signal, particularly a value selected at a prespecified signal frequency and/or a prespecified signal amplitude.

10. Method as claimed in one of the Claims 7 to 9, further comprising:
- a step to digitize the one measuring signal, at least, to generate a digital measuring signal which corresponds to the one measuring signal, at least, which, in particular, is used to generate the initial identification parameter set; and
- a step to generate one discrete signal sequence at least, which, in particular, is contained in an internal memory of the field measuring device, corresponds to sections of the measuring signal, and, in particular, is also used to generate the initial identification parameter set.
- wherein the basic functions of the field measuring device comprise computation routines to compare discrete signal sequences, which correspond to sections of the measuring signal, with signal prototypes that are determined in advance for different applications, particularly for different installation situations and/or for various media, and are classified accordingly, and wherein the step to generate the identification parameter set further comprises steps to compare discrete signal sequences with one or more signal prototypes.

11. Method as claimed in one of the previous claims, further comprising:
- a step to link the field measuring device to the higher-order electronic data processing system in a way that data can be communicated between the field measuring device and the data processing system, particularly via a wired and/or wireless connection; and/or
- a step to create a communication connection between the field measuring device and the data processing system for the particularly wired and/or wireless transmission of the one initial identification parameter set, at least, and/or the upgrade software; and/or
- a step to enter a start command which triggers - at least indirectly, and particularly in real time - the step to transfer the one initial identification parameter set, at least, to the data processing system, particularly to a host computer provided in the data processing system; and/or a step to save at least one identification parameter set, which is generated by the field measuring device and at least approximately identifies the process measuring point, in the higher-order electronic data processing system; and/or
- a step to add at least one additional upgrade software to the collection of software products and a step to use the one identification parameter, at least, saved in the data processing system to generate a message, particularly a message addressed directly to the field measuring device, which signals the addition of the one additional upgrade software, at least, to the collection, particularly in such a way that the message is at least generated if the additional upgrade software suits the process measuring point.

12. Method as claimed in one of the previous claims, further comprising a step to determine the initial identification parameter set using basic software executed in the microcomputer, particularly also using the one measuring signal, at least, and/or taking into consideration an application parameter specified by a user in dialog with the field measuring device via a man-machine interface, particularly one provided directly in the field measuring device.

13. Method as claimed in the previous claim, wherein the initial identification parameter set is determined in such a way that it at least partially provides an instantaneous representation of a current installation situation of the installed field measuring device, particularly the device's orientation, its proximity to a source of disturbance, such as a valve, a pump, an agitator or similar, and/or a medium in the process vessel, particularly the medium's flow type, its composition or similar.

14. Method as claimed in one of the previous claims, wherein the microcomputer, which, in particular, is formed by at least one microprocessor and/or one signal processor, has at least one volatile memory which serves, in particular, as a main memory for a microprocessor provided in the microcomputer and/or for a signal processor provided in the microcomputer.

15. Method as claimed in one of the Claims 7 to 9, further comprising a step to digitize the one measuring signal, at least, to generate a digital measuring signal which corresponds to the one measuring signal, at least, and is used, in particular, to generate the initial identification parameter set.

16. Method as claimed in one of the Claims 7 to 15, further comprising:
- a step to determine at least one digital measured value, which instantaneously represents the one measured variable, at least, based on the one measuring signal, at least, and upgrade software executed in the microcomputer; and/or
- a step to determine at least one digital measured value, which instantaneously represents the one measured variable, at least, based on the one measuring signal, at least, and basic software executed in the microcomputer; and/or
- a step to establish a communication link between the field measuring device and the higher-order electronic data processing system for the - particularly wired or wireless - transmission of at least one digital measured value which instantaneously represents the one measured variable, at least, and is determined on the basis of the one measurement signal at least.

17. Method as claimed in one of the previous claims,
- wherein the upgrade software makes configuration parameters available for installed hardware and/or particularly adaptive computing algorithms that represent digital filters; and/or
- wherein the upgrade software makes an advanced diagnostics function available, particularly one which goes beyond the scope of the inherent basic diagnostic function which is used to determine the one initial identification parameter set at least; and/or
- wherein the upgrade software provides at least a data record for changing configuration parameters for the field measuring device, particularly configuration parameters at least partially generated in advance using calibration measurements performed on said field measuring device and/or on a field measuring device of the same type, particularly for a signal input stage that conditions at least one measuring signal generated by the sensor and/or for an evaluation algorithm which is executed by the microcomputer and numerically computes the one measured value, at least, and/or for a signal output stage which delivers at least a driver signal for the sensor; and/or
- wherein the first memory provided in the field measuring device for the basic software is designed as a non-volatile, particularly persistent, memory; and/or
- wherein the second memory that contains the upgrade software is installed in a host computer which is provided in the data processing system, positioned particularly in a control room; and/or
- wherein the - particularly non-volatile - second memory that contains the upgrade software is arranged outside the field measuring device, particularly at a distance from it and/or inside the data processing system; and/or
- wherein the second memory that contains the upgrade software is created using a hard disk, a CD-ROM, a disk, a DVD, a magnetic tape or another mass storage device; and/or
- wherein the third memory provided in the field measuring device for custom software is designed as a volatile memory.

## Revendications

1. Procédé destiné à la mise en service et/ou la reconfiguration d'un appareil de mesure de terrain programmable, dont le matériel installé comprend au moins un transmetteur de mesure réagissant, en fonctionnement, à une grandeur de mesure chimique et/ou physique d'un produit en vrac et/ou fluide, notamment une matière en vrac, un liquide, un gaz, etc., ainsi qu'un micro-ordinateur communiquant, en fonctionnement, avec le transmetteur, lequel procédé comprend les étapes suivantes :
- Installation de l'appareil de mesure de terrain au moyen du transmetteur de mesure sur et/ou dans un récipient de process servant au guidage et/ou au stockage de produits en vrac et/ou fluides, notamment de matières en vrac, liquides, gaz, etc., notamment constitué d'une conduite, d'un conduit, d'un réservoir, d'un bassin, etc., récipient destiné à former un point de mesure du process ;
- Démarrage du micro-ordinateur et activation d'un logiciel de base au moins partiellement proche du matériel, stocké dans une première mémoire non volatile prévue à l'intérieur de l'appareil de mesure de terrain, mettant à disposition au moins partiellement les fonctionnalités de base de l'appareil de mesure de terrain, de telle manière que le logiciel de base soit exécutable par le micro-ordinateur, si bien que les fonctionnalités de base de l'appareil de mesure de terrain sont disponibles grâce à l'association du logiciel de base et du matériel installé dans l'appareil de mesure de terrain ;
- Transfert d'un jeu de paramètres d'identification initial, identifiant, notamment spécifiant également, au moins approximativement le point de mesure du process, notamment également une situation de montage momentanée de l'appareil de mesure de terrain et/ou un produit se trouvant dans un récipient de process, lequel jeu est stocké au moins temporairement dans l'appareil de mesure de terrain, déterminé notamment moyennant l'utilisation du logiciel de base exécuté dans le micro-ordinateur, vers un système de traitement de données électronique maître, extérieur à l'appareil de mesure de terrain, à distance de celui-ci et/ou réparti dans l'espace, moyennant l'utilisation du logiciel de base exécuté dans le micro-ordinateur ;
- Sélection d'au moins un logiciel de mise à niveau stocké dans une deuxième mémoire, disposée à l'extérieur de l'appareil de mesure de terrain, à distance de celui-ci et/ou à l'intérieur du système de traitement de données, lequel logiciel met à la disposition de l'appareil de mesure de terrain, au-delà des fonctionnalités de base, notamment des fonctionnalités spécifiques à l'appareil de mesure de terrain et/ou à l'application, ou des fonctionnalités personnalisées, à partir d'un ensemble de produits logiciels, notamment préconfectionnables ou confectionnables, moyennant l'utilisation d'au moins un jeu de paramètres d'identification initial, notamment déjà formé sous la forme d'un code de commande pour le logiciel ;
- Transfert à partir du point de mesure du process du logiciel de mise à niveau sélectionné, notamment adapté à la situation de montage de l'appareil de mesure de terrain et/ou au produit se trouvant dans le récipient de process, dans une troisième mémoire, notamment non volatile, prévue à l'intérieur de l'appareil de mesure de terrain ; ainsi que
- Activation du logiciel de mise à niveau, notamment enregistré de façon persistante et/ou permanente, de telle manière que le logiciel de mise à niveau transféré, au moins partiellement proche du matériel, puisse être exécuté au moyen du micro-ordinateur, si bien que les fonctionnalités personnalisées de l'appareil de mesure de terrain sont disponibles grâce l'association du logiciel de mise à niveau et du matériel installé dans l'appareil de mesure de terrain.

2. Procédé selon l'une des revendications précédentes, comprenant en outre une étape de détermination d'un jeu de paramètres d'identification affiné, qui représente momentanément le point de mesure du process formé par la combinaison de l'appareil de mesure de terrain et le récipient de process, notamment également une situation de montage momentanée de l'appareil de mesure de terrain et/ou d'un produit se trouvant dans le récipient de process, moyennant l'utilisation du logiciel de mise à niveau et/ou du logiciel de base exécutés dans le micro-ordinateur.

3. Procédé selon la revendication précédente, comprenant en outre une étape de transfert de l'au moins un jeu de paramètres d'identification affiné vers le système de traitement de données maître moyennant l'utilisation du logiciel de mise à niveau et/ou du logiciel de base exécutés dans le micro-ordinateur

4. Procédé selon la revendication précédente, comprenant en outre une étape de sélection d'au moins un logiciel de mise à niveau, lequel met à disposition de l'appareil de mesure de terrain, au-delà des fonctionnalités de base de l'appareil de mesure de terrain, ainsi qu'au-delà des fonctionnalités personnalisées actuellement disponibles dans l'appareil de mesure de terrain, des fonctionnalités personnalisées supplémentaires ou alternatives, à partir d'un grand nombre de produits logiciels stockés dans le système de traitement de données, moyennant l'utilisation de l'au moins un jeu de paramètres d'identification affiné et transféré.

5. Procédé selon la revendication précédente, comprenant en outre une étape de transfert du logiciel de mise à niveau sélectionné, notamment proche du matériel, dans la troisième mémoire prévue à l'intérieur de l'appareil de mesure de terrain et/ou dans une quatrième mémoire, notamment non volatile, prévue à l'intérieur de l'appareil de mesure de terrain.

6. Procédé selon l'une des revendications 2 à 5, comprenant en outre une étape de comparaison de l'au moins un jeu de paramètres d'identification affiné avec un paramètre d'appareil prédéfini, représentant, notamment sous la forme d'un code d'appareil ou d'une numéro de version, le matériel de l'appareil de mesure de terrain et/ou le logiciel momentanément exécutable dans l'appareil de mesure de terrain, qui signale si le jeu de paramètres d'identification et le paramètre d'appareil coïncident ; et/ou destinée à la génération d'un message, qui signale si le jeu de paramètres d'identification et le paramètre d'appareil sont différents.

7. Procédé selon l'une des revendications précédentes, comprenant en outre une étape de génération d'au moins un signal de mesure au moyen du transmetteur de mesure.

8. Procédé selon les revendications 2 et 7, pour lequel le jeu de paramètres d'identification affiné est également déterminé moyennant l'utilisation de l'au moins un signal de mesure et/ou du jeu de paramètres d'identification initial.

9. Procédé selon l'une des revendications 7 à 8,
- pour lequel les fonctionnalités de base de l'appareil de mesure de terrain englobent des sous-programmes de calcul destinés à l'analyse spectrale au minimum du signal de mesure, notamment reposant sur une transformation de Fourier discrète du signal de mesure et/ou une autocorrélation discrète du signal de mesure ; et/ou
- pour lequel les fonctionnalités de base de l'appareil de mesure de terrain englobent des sous-programmes de calcul destinés à l'analyse spectrale au minimum du signal de mesure, et pour lequel l'étape de la génération du jeu de paramètres d'identification comprend des étapes de détermination d'un spectre d'amplitude discret, notamment de telle sorte que l'étape comprenant l'étape de génération du jeu de paramètres d'identification comprenne en outre une étape d'utilisation d'au moins une valeur d'amplitude spectrale du signal de mesure, notamment sélectionnée avec une fréquence de signal prédéfinie et/ou avec une amplitude de signal prédéfinie.

10. Procédé selon l'une des revendications 7 à 9, comprenant en outre :
- une étape de numérisation de l'au moins un signal de mesure, destinée à la génération d'un signal de mesure numérique correspondant avec l'au moins un signal de mesure, notamment servant également à la génération du jeu de paramètres d'identification initial ; ainsi que
- une étape de génération d'une séquence de signaux discrète, notamment stockée dans une mémoire interne de l'appareil de mesure de terrain, correspondant à des parties du signal de mesure, notamment servant également à la génération du jeu de paramètres d'identification initial,
- pour lequel les fonctionnalités de base de l'appareil de mesure de terrain englobent des sous-programmes de calcul destinés à la comparaison de séquences de signaux correspondant à des parties du signal de mesure avec des prototypes de signaux déterminés, et notamment classifiés, au préalable pour différentes applications, notamment pour différentes situations de montage et/ou pour différents produits, et pour lequel l'étape de génération du jeu de paramètres d'identification comprend en outre des étapes de comparaison des séquences de signaux discrètes avec un ou plusieurs prototypes de signaux.

11. Procédé selon l'une des revendications précédentes, comprenant en outre :
- une étape de connexion de l'appareil de mesure de terrain au système de traitement de données électronique maître, de telle manière à assurer la communication de données, notamment par câble et/ou par une liaison radio sans fil, entre l'appareil de mesure de terrain et le système de traitement de données ; et/ou
- une étape d'établissement d'une liaison de communication entre l'appareil de mesure de terrain et le système de traitement de données, destinée à la transmission, notamment par câble et/ou sans fil, de l'au moins un jeu de paramètres d'identification initial et/ou du logiciel de mise à niveau ;
et/ou
- une étape d'entrée d'une commande de démarrage, qui déclenche l'étape de transfert de l'au moins un jeu de paramètres d'identification initial vers le système de traitement de données, notamment vers un ordinateur hôte prévu dans le système, au moins indirectement, notamment de façon imminente ; et/ou une étape d'enregistrement d'au moins un jeu de paramètres d'identification généré au moyen de l'appareil de mesure de terrain, identifiant au moins approximativement le point de mesure du process, à l'intérieur du système de traitement de données électronique maître ; et/ou
- une étape d'ajout d'au moins un logiciel supplémentaire de mise à niveau de l'ensemble des produits logiciels et une étape d'utilisation de l'au moins un jeu de paramètres d'identification mémorisé dans le système de traitement de données, destinée à la génération d'un message, notamment adressé directement à l'appareil de mesure de terrain, qui signale l'ajout du logiciel supplémentaire de mise à niveau de l'ensemble, notamment de telle manière que le message soit généré au moins lorsque le logiciel de mise à niveau ajouté correspond au point de mesure du process.

12. Procédé selon l'une des revendications précédentes, comprenant en outre une étape de détermination du jeu de paramètres d'identification initial moyennant l'utilisation du logiciel de base exécuté dans le micro-ordinateur, notamment également moyennant l'utilisation de l'au moins un signal de mesure et/ou la prise en compte d'un paramètre d'application prédéfini par un utilisateur dans le dialogue avec l'appareil de mesure de terrain au moyen d'une interface homme-machine, notamment prévue directement dans l'appareil de mesure de terrain.

13. Procédé selon la revendication précédente, pour lequel le jeu de paramètres d'identification initial est déterminé de telle manière à représenter momentanément au moins partiellement une situation de montage momentanée de l'appareil de mesure de terrain installé, notamment sa position de montage, sa proximité par rapport à une source de parasites telle qu'une vanne, une pompe, un agitateur, etc., et/ou un produit se trouvant dans le récipient de process, notamment son type d'écoulement, sa composition, etc.

14. Procédé selon l'une des revendications précédentes, pour lequel le micro-ordinateur, notamment constitué au moins d'un microprocesseur et/ou d'un processeur de signal, comporte au moins une mémoire volatile, notamment servant de mémoire de travail pour un microprocesseur prévu dans le micro-ordinateur et/ou pour un processeur de signal prévu dans le micro-ordinateur.

15. Procédé selon l'une des revendications 7 à 9, comprenant en outre une étape de numérisation de l'au moins un signal de mesure, destinée à la génération d'un signal de mesure numérique correspondant avec l'au moins un signal de mesure, notamment servant également à la génération du jeu de paramètres d'identification initial.

16. Procédé selon l'une des revendications 7 à 15, comprenant en outre :
- une étape de détermination d'au moins une valeur de mesure numérique, qui représente momentanément l'au moins une grandeur de mesure, basée sur l'au moins un signal de mesure et le logiciel de mise à niveau exécuté dans le micro-ordinateur ; et/ou
- une étape de détermination d'au moins une valeur de mesure numérique, qui représente momentanément l'au moins une grandeur de mesure, basée sur l'au moins un signal de mesure et le logiciel de base exécuté dans le micro-ordinateur ; et/ou
- une étape d'établissement d'une liaison de communication entre l'appareil de mesure de terrain et le système de traitement de données électronique maître, destinée à la transmission, notamment par câble et/ou sans fil, d'une valeur de mesure numérique représentant momentanément l'au moins une grandeur de mesure, déterminée sur la base de l'au moins un signal de mesure.

17. Procédé selon l'une des revendications précédentes,
- pour lequel le logiciel de mise à niveau met à disposition les paramètres de configuration pour le matériel installé et/ou des algorithmes de calcul représentant des filtres numériques, notamment adaptatifs ; et/ou
- pour lequel le logiciel de mise à niveau met à disposition une fonction de diagnostic étendue, notamment allant au-delà d'une fonction de diagnostic inhérente aux fonctionnalités de base et destinée à la détermination de l'au moins un jeu de paramètres d'identification initial ; et/ou
- pour lequel le logiciel de mise à niveau fournit à l'appareil de mesure de terrain au moins un bloc de données de paramètres de réglage à modifier, notamment généré au moins partiellement au moyen de mesures d'étalonnage réalisées au préalable sur le même appareil de mesure de terrain et sur un appareil de mesure de terrain de type identique, notamment pour un étage d'entrée de signal conditionnant l'au moins un signal de mesure généré au moyen du transmetteur de mesure et/ou pour un algorithme d'exploitation calculant de façon numérique au moins une valeur de mesure et/ou pour un étage de sortie de signal fournissant au moins un signal d'attaque pour le transmetteur de mesure ; et/ou
- pour lequel la première mémoire prévue dans l'appareil de mesure de terrain pour le logiciel de base est conçue sous la forme d'une mémoire non volatile, notamment persistante ; et/ou
- pour lequel la deuxième mémoire mémorisant le logiciel de mise à niveau est installée dans un ordinateur hôte, notamment disposé dans une salle de contrôle, prévu dans le système de traitement de données ; et/ou
- pour lequel la deuxième mémoire, notamment non volatile, mémorisant le logiciel de mise à niveau est disposée à l'extérieur de l'appareil de mesure de terrain, notamment à distance de celui-ci et/ou à l'intérieur du système de traitement de données ; et/ou
- pour lequel la deuxième mémoire mémorisant le logiciel de mise à niveau est constituée d'un disque dur, d'un lecteur de CD-ROM, d'une disquette, d'un DVD, d'une bande magnétique ou d'une autre mémoire de masse ; et/ou
- pour lequel la troisième mémoire prévue dans l'appareil de mesure de terrain pour le logiciel personnalisé est conçue sous la forme d'une mémoire volatile.
